(19) Europäisches Patentamt
European Patent Office
Office européen des brevets

(11) EP 4 501 975 A1

(12) EUROPEAN PATENT APPLICATION
published in accordance with Art. 153(4) EPC

(43) Date of publication:
05.02.2025 Bulletin 2025/06

(21) Application number: 23774811.6

(22) Date of filing: 17.03.2023

(51) International Patent Classification (IPC):
*C08F 10/06* (2006.01)

(52) Cooperative Patent Classification (CPC):
C08F 10/06

(86) International application number:
PCT/JP2023/010630

(87) International publication number:
WO 2023/182216 (28.09.2023 Gazette 2023/39)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 24.03.2022 JP 2022048130

(71) Applicant: Japan Polypropylene Corporation
Tokyo 100-8251 (JP)

(72) Inventors:
- TAKIZAWA, Miori
  Yokkaichi-shi, Mie 510-0848 (JP)
- ITO, Masaaki
  Yokkaichi-shi, Mie 510-0848 (JP)
- NAKANO, Masato
  Yokkaichi-shi, Mie 510-0848 (JP)

(74) Representative: Hoffmann Eitle
Patent- und Rechtsanwälte PartmbB
Arabellastraße 30
81925 München (DE)

# (54) BRANCHED PROPYLENE-BASED POLYMER

(57) To provide a branched propylene-based polymer that is excellent in ductility when melting, while retaining melt tension necessary for molding. A branched propylene-based polymer comprising propylene and 0 mol % to 11 mol % of ethylene and an $\alpha$-olefin containing 4 or more carbon atoms, and having the following properties (1) to (4): property (1): MFR is from 0.1 g/10 min to 100 g/10 min; property (2): Mz/Mw is from 2.5 to 4.0; property (3): a branching index g' ($100\times10^4$) is from 0.60 to 0.75; and property (4): a flow activation energy (Ea) kJ/mol obtained by measuring dynamic viscoelasticity and MFR satisfy the following formula (1): [Formula (1): $Ea \geq -12.5 \times \log(MFR) + 66$].



Processed by Luminess, 75001 PARIS (FR)

## Description

Technical Field

The present invention relates to a branched propylene-based polymer.

Background Art

In recent years, much research has been conducted for the improvement of suitability of polypropylene for sheet molding, blow molding, heat molding, foam molding and the like, in each of which a material with relatively high melt tension is necessary, by introducing a branched structure to polypropylene.

Recently, as a method for introducing a branched structure to polypropylene, a macromonomer copolymerization method using a metallocene catalyst has been mainly proposed. A branched polypropylene obtained by the macromonomer copolymerization method is advantageous in that it has fewer problems compared to a crosslinked polypropylene peroxidized by a crosslinking coagent, the problems including gel production owing to an excessively crosslinked component and ductility deterioration owing to a component having a high molecular weight increased by crosslinking.

As the branched propylene-based polymer obtained by the macromonomer copolymerization method, a polyolefin composition is disclosed, which consists essentially of an isotactic polypropylene and one or more kinds of comonomers as needed, and in which the content of all of the comonomers of the polyolefin composition is from 0 mol % to 20 mol %, and the weight average branching index g' of the polyolefin composition with respect to the low-molecular-weight region, is less than 0.93 (see Patent Document 1). Also, a propylene homopolymer is disclosed, which is characterized as follows: (a) the propylene homopolymer satisfies the relation represented by the following formula (I):

$$MI_5/MI_{2.16} \geq 0.240 \times Mw/Mn + 3.1 \quad (I)$$

(where $MI_5/MI_{2.16}$ is the ratio between the melt index $MI_5$ (g/10 min) at a load of 5.0 kg and the melt index $MI_{2.16}$ (g/10 min) at a load of 2.16 kg, both of which are measured at a temperature of 230°C, and Mw/Mn is the ratio between the weight average molecular weight Mw and the number average molecular weight Mn, both of which are measured by gel permeation chromatography (GPC)), and (b) the melt tension MS (g), which is measured at a temperature of 230°C, and the limiting viscosity [η] (dl/g), which is measured at a temperature of 135°C in a tetralin solvent, satisfy the relation represented by the following formula (II):

$$\log MS \geq 3.17 \times \log[\eta] - 0.68 \quad (II)$$

(where the limiting viscosity [η] ranges from 0.1 dl/g to 15.0 dl/g). The obtained branched propylene-based polymer is shown to have high melt strength and high melt tension (see Patent Document 2).

A branched polypropylene composition having a polydispersity of 4.0 or less and a melting point of more than 90°C is disclosed, in which the weight average branching index g' of the branched polypropylene composition is less than 0.95. A branched propylene-based polymer thus obtained is shown to have improved melt strength (see Patent Document 3).

Also, a multi-stage polymerization method is disclosed, which uses a catalyst that contains two kinds of specific metallocene compounds, more specifically, a catalyst obtained by combining metallocene compounds (such as rac-$SiMe_2$[2-Me-4-Ph-Ind]$_2ZrCl_2$ and rac-$SiMe_2$[2-Me-4-Ph-Ind]$_2HfCl_2$) with a silica on which methylaluminoxane (MAO) is supported. The branched propylene-based polymer thus obtained is indicated to show relatively high melt tension (see Patent Document 4).

In addition, a propylene homopolymer having the following properties (1) to (6) is disclosed:

(1) the weight average molecular weight (Mw) obtained by GPC is from $20\times10^4$ to $100\times10^4$
(2) the ratio (Q value) between the weight average molecular weight (Mw) and the number average molecular weight (Mn), both of which are obtained by GPC, is from 3.5 to 10.5;
(3) $\alpha/\beta$ is 1.2 or more (where $\alpha = H_{50} - Tp$; $\beta = Tp - L_{50}$; Tp denotes the common logarithm of a molecular weight corresponding to a peak position of a molecular weight distribution curve obtained by GPC; and $L_{50}$ and $H_{50}$ denote the common logarithms of molecular weights at the position 50% the height of a peak ($L_{50}$ is on the lower molecular weight side than Tp, and $H_{50}$ is on the higher molecular weight side than Tp);
(4) the mm fraction of propylene unit triad sequences obtained by $^{13}$C-NMR analysis is 90% or more;
(5) in temperature rising elution fractionation (TREF) measurement using o-dichlorobenzene as a solvent, a

component eluted at a temperature of 90°C or less is 6.0 weight % or less; and
(6) in $^{13}C$-NMR analysis of the propylene polymer, three methylene carbons (Ca, Cb and Cc) are observed from 44.0 ppm to 44.1 ppm, from 44.7 ppm to 44.8 ppm, and from 44.8 ppm to 44.9 ppm; a methine carbon (Cbr) is observed from 31.6 ppm to 31.7 ppm; and the number of the methine carbon per 1000 whole skeleton forming carbon atoms is 0.1 or more (the term "whole skeleton forming carbon atoms" means whole carbon atoms other than methyl carbons). The propylene homopolymer is shown to have good melt tension (see Patent Document 5).

Another method is disclosed, in which a propylene-based polymer having a strain hardening index ($\lambda$max) of 2.0 or more in melt tension measurement, is produced by use of a catalyst containing several specific metallocene compounds, and a branched polypropylene thus obtained is shown to have good melt tension (see Patent Document 6).

Patent Documents 7 discloses polypropylene having a multi-branching index (MBI) of at least 0.15, wherein the multi-branching index (MBI) is defined as the slope of a strain hardening index (SHI) as the function of the decadic logarithm of the Hencky strain rate (lg(d$\varepsilon$/dt)); wherein the d$\varepsilon$/dt is the deformation rate, $\varepsilon$ is the Hencky strain, and the strain hardening index (SHI) is measured at 180°C; wherein the strain hardening index (SHI) is defined as the slope of the decadic logarithm (lg($\eta E^+$)) of the tensile stress growth function as the function of the decadic logarithm (lg($\varepsilon$)) of the Hencky strain in the range of Hencky strains between 1 and 3.

Citation List

Patent Documents

Patent Document 1: Japanese translation of PCT International Application No. 2001-525460
Patent Document 2: Japanese Patent Application Laid-Open (JP-A) No. H10-338717
Patent Document 3: Japanese translation of PCT International Application No. 2002-523575
Patent Document 4: JP-A No. 2001-64314
Patent Document 5: JP-A No. 2007-154121
Patent Document 6: JP-A No. 2009-57542
Patent Document 7: Japanese translation of PCT International Application No. 2009-533540

Summary of Invention

Technical Problem

However, the branched propylene-based polymers obtained by the macromonomer copolymerization methods disclosed in Patent Documents 1 to 6 have the following problem: the ductility of the polymer melts remains insufficient, while the branched propylene-based polymers have high melt tension and improved suitability for sheet molding, blow molding, heat molding, foam molding and the like.

The mechanical properties of the branched propylene-based polymer obtained by the method disclosed in Patent Document 7 are improved by increasing the content of the amorphous moieties; however, the melt tension which is indicated by the strain hardening index (SHI@$1s^{-1}$) at the fast strain rate (d$\varepsilon$/dt = 1.0/sec) is not very high. Accordingly, the branched propylene-based polymer cannot show various kinds of moldability properties, satisfactorily.

An object of the present invention is to provide a branched propylene-based polymer that is excellent in ductility when melting, while retaining melt tension necessary for molding.

Solution to Problem

The present invention relates to the following <1> to <7>.

<1> A branched propylene-based polymer comprising propylene and 0 mol % to 11 mol % of ethylene and an $\alpha$-olefin containing 4 or more carbon atoms, and having the following properties (1) to (4):

property (1): a melt flow rate (MFR) measured at a temperature of 230°C and a load of 2.16 kg is from 0.1 g/10 min to 100 g/10 min;
property (2): a ratio (Mz/Mw) between a z average molecular weight (Mz) and a weight average molecular weight (Mw), both of which are obtained by gel permeation chromatography (GPC), is from 2.5 to 4.0;
property (3): in a molecular weight distribution curve obtained by 3D-GPC, a branching index g' ($100\times10^4$) at an

absolute molecular weight $M_{abs}$ of $100\times10^4$ is from 0.60 to 0.75; and
property (4): a flow activation energy (Ea) kJ/mol obtained by measuring dynamic viscoelasticity and the MFR satisfy the following formula (1):

$$Ea \geq -12.5 \times \log(MFR) + 66 \quad \text{Formula (1).}$$

<2> The branched propylene-based polymer according to <1>, further having the following property (2-2):
property (2-2): in an integral molecular weight distribution curve obtained by GPC, a ratio ($W200\times10^4/W100\times10^4$) of a percentage ($W200\times10^4$) of a component having a molecular weight of $200\times10^4$ or more to a percentage ($W100\times10^4$) of a component having a molecular weight of $100\times10^4$ or more and the MFR satisfy the following formula (2):

$$(W200\times10^4/W100\times10^4) < -0.05 \times \log(MFR) + 0.34 \quad \text{Formula (2).}$$

<3> The branched propylene-based polymer according to <1> or <2>, further having the following properties (5) and (5-2):

property (5): a mesotriad fraction measured by $^{13}$C-NMR is 95.0% or more and less than 99.0%, and
property (5-2): a heterologous bond (2,1 bond) amount is in a range of from 0 mol % to 0.30 mol %, and a heterologous bond (1,3 bond) amount is in a range of from 0 mol % to 0.25 mol %.

<4> The branched propylene-based polymer according to any one of <1> to <3>, further having the following property (6):
property (6): a number of long-chain branches measured by $^{13}$C-NMR is from 0.1/1000 monomers to 0.5/1000 monomers.
<5> The branched propylene-based polymer according to any one of <1> to <4>, further having the following property (7):
property (7): in an elution curve obtained by temperature rising elution fractionation (TREF) measurement with o-dichlorobenzene (ODCB), an amount of a component eluted at a temperature of 40°C or less, is from 0.1 mass % to 2.5 mass %.
<6> The branched propylene-based polymer according to any one of <1> to <5>, further having the following property (8):
property (8): a strain hardening index (SHI@$1s^{-1}$) at a strain rate ($d\varepsilon/dt$) of 1.0/sec is from 0.70 to 2.50.
<7> The branched propylene-based polymer according to any one of <1> to <6>, further having the following property (9):
property (9): a multi-branching index (MBI) is from 0.20 to 1.00.

Advantageous Effects of Invention

According to the present invention, a branched propylene-based polymer that is excellent in ductility when melting, while retaining melt tension necessary for molding, is provided.

Brief Description of the Drawings

[FIG. 1] FIG. 1 is a view illustrating the baseline and interval of a chromatogram in GPC.
[FIG. 2] FIG. 2 is a graph with the log (MFR), which is the logarithm of the MFR, on the x-axis and the $W200\times10^4/W100\times10^4$ on the y-axis, in which the data of branched propylene-based polymers obtained in examples and comparative examples are plotted.
[FIG. 3] FIG. 3 is a view showing an example of an integral molecular weight distribution curve.
[FIG. 4] FIG. 4 is a graph with the log (MFR), which is the logarithm of the MFR, on the x-axis and Ea on the y-axis, in which the data of branched propylene-based polymers obtained in examples and comparative examples are plotted.
[FIG. 5] FIG. 5 is a graph with the log (MFR), which is the logarithm of the MFR, on the x-axis and the maximum drawing rate (MaxDraw) at 230°C on the y-axis, in which the data of branched propylene-based polymers obtained in examples and comparative examples are plotted.

Description of Embodiments

The present inventors found the following design concept: to improve the ductility of a branched propylene-based polymer, it is preferable to contain multi-branching molecules having a molecular structure in which many branched chains are introduced in the medium-molecular-weight to high-molecular-weight region and to decrease ultra-high-molecular-weight region components having an excessively long relaxation time. The present inventors further specified the relation between the flow activation energy (Ea) obtained by measuring dynamic viscoelasticity and the MFR as an appropriate index of branching characteristics. As a result, they succeeded in obtaining a branched propylene-based polymer that is excellent in ductility when melting, while retaining fluidity and melt tension which are necessary for molding.

The branched propylene-based polymer of the present invention is a branched propylene-based polymer comprising propylene and 0 mol % to 11 mol % of ethylene and an $\alpha$-olefin containing 4 or more carbon atoms, and having the following properties (1) to (4):

property (1): a melt flow rate (MFR) measured at a temperature of 230°C and a load of 2.16 kg is from 0.1 g/10 min to 100 g/10 min;
property (2): a ratio (Mz/Mw) between a z average molecular weight (Mz) and a weight average molecular weight (Mw), both of which are obtained by gel permeation chromatography (GPC), is from 2.5 to 4.0;
property (3): in a molecular weight distribution curve obtained by 3D-GPC, a branching index g' ($100\times10^4$) at an absolute molecular weight $M_{abs}$ of $100\times10^4$ is from 0.60 to 0.75; and
property (4): a flow activation energy (Ea) kJ/mol obtained by measuring dynamic viscoelasticity and the MFR satisfy the following formula (1):

$$Ea \geq -12.5 \times \log(MFR) + 66 \quad \text{Formula (1).}$$

The branched propylene-based polymer of the present invention has the properties (1) to (4); the branched propylene-based polymer has a branched propylene structure different from the prior art, especially molecular weight distribution and branch distribution; and the Ea relative to the MFR is high. Accordingly, the branched propylene-based polymer of the present invention is a branched propylene-based polymer that is excellent in ductility when melting, while retaining fluidity and melt tension which are necessary for molding.

When there are many unrelaxed components or many components having a long relaxation time in the branched propylene-based polymer, the melt tension increases. Meanwhile, it is thought as follows: local orientational crystallization proceeds at many parts in the polymer from the molecular chain entanglement points; therefore, non-uniform orientational crystallization occurs and results in poor ductility.

In the present invention, the relation between the Ea and the MFR was focused on and specified as the index of the branching characteristics of the branched propylene-based polymer that is excellent in ductility when melting, while retaining melt tension necessary for molding.

It is said that Ea is an index that has a large numerical value when the number of branches is large or when the branch length is long.

The branched propylene-based polymer of the present invention has the properties (1) to (4); the branched propylene-based polymer has a branched propylene structure different from the prior art, especially molecular weight distribution and branch distribution; and the Ea relative to the MFR is high. Accordingly, it is estimated that the branched propylene-based polymer contains multi-branching molecules having the molecular structure in which many branched chains are introduced in the medium-molecular-weight to high-molecular-weight region, while the branched propylene-based polymer has the branch distribution in which the content of unrelaxed components or components having a long relaxation time is small. The branched propylene-based polymer of the present invention specified as above shows a relaxation time distribution in which the amount of components having a certain short relaxation time is large and the amount of components having an extraordinarily long relaxation time is small. Accordingly, it is estimated that since local orientational crystallization starting from the molecular chain entanglement points is less likely to occur and non-uniform orientational crystallization can be suppressed, the ductility improves.

Hereinafter, the present invention will be explained in detail. In the present Description, "to" which shows a numerical range is used to describe a range in which the numerical values described before and after "to" indicate the lower limit value and the upper limit value.

In the present Description, the upper and lower limit values indicating the numerical range may be any combination of values. Also in the present Description, the preferred ranges of the properties may be any combination of values.

In the present invention, the logarithm means a common logarithm, that is, it is a decadic logarithm.

Also in the present invention, the ductility means a resin property such that molten resin can spread widely, thinly and evenly or can spread narrowly, long and evenly.

The branched propylene-based polymer of the present invention may be a propylene homopolymer, or it may be a copolymer of propylene and an $\alpha$-olefin comonomer containing 2 to 20 carbon atoms other than propylene, such as one or more kinds of comonomers selected from ethylene, 1-butene, 1-hexene, 1-octene and 4-methyl-1-pentene.

I. Physical properties of the branched propylene-based polymer

Property (1):

In the branched propylene-based polymer of the present invention, the melt flow rate (MFR) measured at a temperature of 230°C and a load of 2.16 kg is from 0.1 g/10 min to 100 g/10 min.
In the present invention, when the MFR of the branched propylene-based polymer is too small, the fluidity of melted resin deteriorates and makes thermoforming difficult. Accordingly, the MFR is 0.1 g/10 min or more, preferably 1.0 g/10 min or more, and more preferably 3.0 g/10 min or more.
On the other hand, when the MFR is too large, the melt tension decreases. Accordingly, the MFR is 100 g/10 min or less, preferably 80 g/10 min or less, more preferably 60 g/10 min or less, and still more preferably 40 g/10 min or less. The MFR may be 32 g/10 min or less, and it may be 30 g/10 min or less.
In the present invention, the MFR is a value obtained by pelletizing the branched propylene-based polymer and measuring the polymer in accordance with JIS K7210-1: 2014 "Plastics - Determination of the melt mass-flow rate (MFR) and melt volume-flow rate (MVR) of thermoplastics - Part 1: Standard method" in the following test condition: 230°C and a load of 2.16 kgf. The pelletization is carried out in the same manner as "Granulation" described below under "Examples".
The MFR can be adjusted by changing the polymerization temperature or pressure, and/or by adding hydrogen or another chain transfer agent during polymerization.

Property (2):

In the branched propylene-based polymer of the present invention, the ratio (Mz/Mw) between the z average molecular weight (Mz) and the weight average molecular weight (Mw), both of which are obtained by gel permeation chromatography (GPC), is from 2.5 to 4.0.
The Mz and Mw used herein and the number average molecular weight (Mn) are indices representing the average molecular weight of a polymer. Mz is the index of the average molecular weight that the high-molecular-weight-side proportion increases; Mn is the index of the average molecular weight that the low-molecular-weight-side proportion increases; and Mw is the index of the average molecular weight therebetween. The ratios thereof, i.e., Mw/Mn and Mz/Mw, are indices of the extent of the molecular weight distribution of the polymer.
From the point of view that in the branched propylene-based polymer, the components having an extraordinarily long relaxation time are present in an appropriate amount and a decrease in the melt tension is suppressed, the Mz/Mw is from 2.5 to 4.0. The upper limit of the Mz/Mw of the branched propylene-based polymer of the present invention, is preferably 3.6 or less, more preferably 3.4 or less, and still more preferably 3.2 or less. The lower limit of the Mz/Mw of the branched propylene-based polymer of the present invention, is preferably 2.6 or more, more preferably 2.8 or more, and still more preferably 2.9 or more.
It is thought that when the branched propylene-based polymer of the present invention has the molecular weight distribution property as described above, the components having an extraordinarily long relaxation time can decrease, and the ductility can improve.
In the branched propylene-based polymer of the present invention, the ratio between the Mw and Mn obtained by GPC (Mw/Mn) may be from 3.0 to 7.0. When the Mw/Mn is in this range, an excessive increase in the number of the components having an extraordinarily long relaxation time is suppressed, and the melt tension is retained. Accordingly, in the branched propylene-based polymer of the present invention, the upper limit of the Mw/Mn may be 7.0 or less, may be 6.0 or less, may be 5.0 or less, may be 4.5 or less, or may be 4.3 or less. On the other hand, the lower limit of the Mw/Mn may be 3.0 or more, may be 3.2 or more, or may be 3.3 or more, from the viewpoint of suppressing a decrease in the melt tension.
From the viewpoint of the fluidity of the melted resin, the Mw of the branched propylene-based polymer of the present invention may be from $15.0\times10^4$ to $35.0\times10^4$, may be from $18.0\times10^4$ to $33.0\times10^4$, or may be from $20.0\times10^4$ to $32.0\times10^4$.
The Mz, Mw, Mn, Mw/Mn, Mz/Mw values are obtained by GPC. The methods and devices used to measure them are as follows.

- Device: GPC (ALC/GPC, 150C) manufactured by Waters
- Detector: IR detector MIRAN 1A manufactured by FOXBORO (Measurement wavelength: 3.42 um)
- Column: AT-806MS (three sets) manufactured by Showa Denko K.K.

- Mobile phase solvent: o-Dichlorobenzene (ODCB)
- Measurement temperature: 140°C
- Flow rate: 1.0 mL/min
- Injected amount: 0.2 mL

Measurement sample preparation is carried out as follows. A solution (1 mg/mL) is prepared by use of a sample and ODCB (containing 0.5 mg/mL of dibutylhydroxytoluene (BHT)). The sample is dissolved at 140°C for one hour, thereby preparing a measurement sample.

The baseline and interval of the obtained chromatogram are determined as shown in FIG. 1.

A retention capacity obtained by GPC is converted into a molecular weight by use of a calibration curve created preliminarily with standard polystyrenes. The standard polystyrenes used are the following products manufactured by Tosoh Corporation: F380, F288, F128, F80, F40, F20, F10, F4, F1, A5000, A2500 and A1000.

A calibration curve is created by injecting 0.2 mL of a solution in which the standard polystyrenes are dissolved in ODCB (containing 0.5 mg/mL of BHT) so that they are 0.5 mg/mL each. The calibration curve uses a cubic equation obtained by approximation by the least-squares method.

A viscosity equation used for the conversion into the molecular weight, i.e., $[\eta] = K \times M^{\alpha}$, uses the following numerical values.

- PS: $K = 1.38\times10^{-4}$, $\alpha = 0.7$
- PP: $K = 1.03\times10^{-4}$, $\alpha = 0.78$

The average molecular weight and molecular weight distribution (Mz, Mw, Mn, Mw/Mn and Mz/Mw) of the branched propylene-based polymer measured by GPC, and the balances thereof can be adjusted by the polymerization conditions such as the catalyst species selection, the polymerization temperature, the monomer concentration and the hydrogen amount.

Property (2-2):

In the branched propylene-based polymer of the present invention, in the integral molecular weight distribution curve obtained by GPC, the ratio ($W200\times10^4/W100\times10^4$) of the percentage ($W200\times10^4$) of the component having a molecular weight of $200\times10^4$ or more to the percentage ($W100\times10^4$) of the component having a molecular weight of $100\times10^4$ or more and the MFR satisfy the following formula (2):

$$(W200\times10^4/W100\times10^4) < -0.05 \times \log(MFR) + 0.34 \quad \text{Formula (2)}.$$

The $W200\times10^4/W100\times10^4$ is the ratio of the amount of the much higher-molecular-weight components in the high-molecular-weight region components to the amount of the high-molecular-weight region components. Considering that the $W200\times10^4/W100\times10^4$ is a function negatively correlated with an increase in the MFR, and based on the data of Examples and the data of Comparative Examples having the same level of MFR as Examples, the formula (2) approximately determines the relational formula between the $W200\times10^4/W100\times10^4$ and the MFR, which distinguishes between Examples that can solve the problems and Comparative Examples of the prior art that cannot solve the problems (see FIG. 2).

Satisfying the formula (2) means that the $W200\times10^4/W100\times10^4$ is less than the specific value relative to the MFR. That is, it means the following: with respect to the amount of the high-molecular-weight components having a molecular weight of $100\times10^4$ or more, the amount of the much higher-molecular-weight components having a molecular weight of $200\times10^4$ or more is relatively small.

When the $W200\times10^4/W100\times10^4$ is in the above range relative to the MFR, it is thought that an excessive increase in the number of the components having a long relaxation time is suppressed, and the ductility is retained. Accordingly, the branched propylene-based polymer of the present invention preferably satisfies the formula (2).

The $W100\times10^4$ of the branched propylene-based polymer of the present invention may be 1.00 mass % or more and 9.50 mass % or less.

It is thought that due to the presence of the high-molecular-weight region components, the melt tension of the branched propylene-based polymer of the present invention improves. Accordingly, the present invention focuses on the component having a molecular weight of $100\times10^4$ or more, and in the branched propylene-based polymer of the present invention, the $W100\times10^4$ may be 1.00 mass % or more, or it may be 2.00 mass % or more.

Meanwhile, it is thought that due to the presence of an appropriate amount of the high-molecular-weight region

components, an appropriate amount of the components having a long relaxation time are retained, and the ductility is also retained. Accordingly, the W100$\times10^4$ may be 9.50 mass % or less, may be 8.00 mass % or less, may be 6.00 mass % or less, or may be 5.00 mass % or less.

Also, the W200$\times10^4$ of the branched propylene-based polymer of the present invention may be 2.00 mass % or less.

As with the above, due to the presence of an appropriate amount of the very-high-molecular-weight region components, the components having an extraordinarily long relaxation time are appropriately retained, and the ductility is also retained. Accordingly, the present invention focuses on the component having a molecular weight of 200$\times10^4$ or more, and in the branched propylene-based polymer of the present invention, the W200$\times10^4$ may be 2.00 mass % or less, may be 1.00 mass % or less, or may be 0.70 mass % or less. In the branched propylene-based polymer, the W200$\times10^4$ may be 0.05 mass % or more.

Also, the W200$\times10^4$/W100$\times10^4$ of the branched propylene-based polymer of the present invention may be 0.25 or less, may be 0.20 or less, or may be 0.17 or less.

As with the above, when the W200$\times10^4$/W100$\times10^4$ is in the above range, it is thought that an excessive increase in the number of the components having a long relaxation time is suppressed, and the ductility is retained.

The W200$\times10^4$/W100$\times10^4$ of the branched propylene-based polymer of the present invention may be 0.02 or more, may be 0.03 or more, or may be 0.05 or more.

In the present invention, W100$\times10^4$ is defined as a value obtained by, in the integral molecular weight distribution curve (the whole amount is normalized to 1) obtained by GPC, subtracting the integral value until the molecular weight (M) of 100$\times10^4$ (Log(M) = 6.0) from 1 and multiplying the value thus obtained by 100. Also, W200$\times10^4$ is defined as a value obtained by, in the integral molecular weight distribution curve (the whole amount is normalized to 1) obtained by GPC, subtracting the integral value until the molecular weight (M) of 200$\times10^4$ (Log(M) = 6.3) from 1 and multiplying the value thus obtained by 100. FIG. 3 shows an example of the integral molecular weight distribution curve.

In the present invention, as with the above-described property (2), the W100$\times10^4$ and W200$\times10^4$ of the branched propylene-based polymer can be adjusted by the polymerization conditions such as the catalyst species selection, the polymerization temperature, the monomer concentration and the hydrogen amount.

Property (3):

In the branched propylene-based polymer of the present invention, in the molecular weight distribution curve obtained by 3D-GPC, the branching index g' (100$\times10^4$) at an absolute molecular weight $M_{abs}$ of 100$\times10^4$ is from 0.60 to 0.75.

The branching index g' is given by the ratio ($[\eta]_{br}/[\eta]_{lin}$) of the intrinsic viscosity $[\eta]_{br}$ of the polymer having a long-chain branched structure to the intrinsic viscosity $[\eta]_{lin}$ of a linear polymer having the same molecular weight. When the long-chain branched structure exists in the polymer molecule, the radius of gyration decreases compared to the linear polymer molecule having the same molecular weight. As the radius of gyration decreases, the intrinsic viscosity also decreases. Accordingly, the g' is a value less than 1.0. Even if the branched structure amount is the same, when the branched chain length is long, the radius of gyration decreases compared to the linear polymer molecule having the same molecular weight. As the radius of gyration decreases, the intrinsic viscosity also decreases. Accordingly, the g' is a value less than 1.0. The g' of the linear polymer is defined as 1.0.

The definition of the g' is described in "Developments in Polymer Characterization-4" (J. V. Dawkins ed. Applied Science Publishers, 1984), and the g' is an index heretofore known to those skilled in the art.

The g' can be obtained as the function of $M_{abs}$ by use of a 3D-GPC.

In the present invention, the 3D-GPC is a GPC device to which three detectors are connected. The three detectors are a refractive index detector (RI), a viscometer, and a multi-angle laser light scattering detector (MALLS).

In the branched propylene-based polymer of the present invention, the weight average molecular weight ($Mw_{abs}$) of the absolute molecular weight $M_{abs}$ may be less than 100$\times10^4$. Also, the branched propylene-based polymer of the present invention preferably has the branched structure from the $Mw_{abs}$ to the high-molecular-weight region where $M_{abs}$ = 100$\times10^4$, from the viewpoint of obtaining a high melt tension.

Accordingly, the g'(100$\times10^4$) of the branched propylene-based polymer of the present invention is 0.75 or less, preferably 0.74 or less, and more preferably 0.72 or less. When branched structures are appropriately present in the high-molecular-weight region where the $M_{abs}$ = 100$\times10^4$ and when the branched chain length of the introduced branched structure is an appropriate length, it is thought that an excessive increase in the number of the components having an extraordinarily long relaxation time is suppressed, and the ductility can be also retained. Accordingly, the g' (100$\times10^4$) is 0.60 or more, preferably 0.62 or more, and more preferably 0.65 or more.

It is thought that since the amount of the component having a branched structure in the molecular weight region where $M_{abs}$ = 100$\times10^4$, which corresponds to the high-molecular-weight component, is appropriately large in the specific range, the melt strength of the branched propylene-based polymer of the present invention improves, and as a non-linear

viscoelastic property, the strain hardening index (SHI) in the elongational viscosity measurement and the melt tension (MT) become large. Even when the number of the branches in the whole polymer is large, the SHI does not become large as long as the amount of the component having a branch in the moiety where $M_{abs} = 100\times10^4$, which corresponds to the high-molecular-weight component, is small. Meanwhile, it is thought that since the branched propylene-based polymer of the present invention has an appropriate amount of branched structure in the region where $M_{abs} = 100\times10^4$, and since the branched chain length of the introduced branched structure is not too long, a deterioration in the ductility of the branched propylene-based polymer can be suppressed.

Property (3-2):

In the branched propylene-based polymer of the present invention, as with the property (3), it is thought that due to the presence of an appropriate amount of the components having a long relaxation time, the ductility can be retained. Accordingly, in the molecular weight distribution curve obtained by 3D-GPC, the branching index g' ($Mw_{abs}$) at $Mw_{abs}$ may be from 0.70 to 0.90.

The lower limit of the g' ($Mw_{abs}$) may be 0.73 or more, or it may be 0.75 or more. On the other hand, the upper limit may be 0.87 or less, or it may be 0.86 or less.

Property (3-3):

In the branched propylene-based polymer of the present invention, in the molecular weight distribution curve obtained by 3D-GPC, the g' ($Mw_{abs}$) and the g'($100\times10^4$) may satisfy the following formula (3).

$$0.10 \le g'(Mw_{abs}) - g'(100\times10^4) \quad \text{Formula (3)}$$

It is thought that due to the large difference between the g'($Mw_{abs}$) and the g'($100\times10^4$), the components having a long relaxation time increases, and the melt strength of the branched propylene-based polymer of the present invention can be increased.

Also in the branched propylene-based polymer of the present invention, in the molecular weight distribution curve obtained by 3D-GPC, the g' ($Mw_{abs}$) and the g' ($100\times10^4$) may satisfy the following formula (3-2).

$$g'(Mw_{abs}) - g'(100\times10^4) \le 0.20 \quad \text{Formula (3-2)}$$

It is thought that in the branched propylene-based polymer of the present invention, as described above, the difference between the g' ($Mw_{abs}$) and the g'($100\times10^4$) is preferably not too large, since the components having an extraordinarily long relaxation time do not relatively increase too much, and the ductility improves.

Also, it is thought that the branched propylene-based polymer of the present invention preferably has the branch distribution in this range, since it can maintain the balance between the melt strength of the whole polymer and the ductility.

The details of the method for measuring the molecular weight distribution and the branching index of each molecular weight by the $M_{abs}$ is as follows. The following detectors are connected in the order of MALLS, RI and Viscometer.

- Devices: ALLIANCE GPCV2000 manufactured by Waters Corporation (GPC equipped with RI and Viscometer), DAWN-E manufactured by Technology (MALLS)
- Columns: GMHHR-H(S) HT manufactured by Tosoh Corporation (Two sets)
- Mobile phase solvent: 1,2,4-trichlorobenzene (antioxidant IRGANOX 1076 manufactured by BASF Japan is added thereto at a concentration of 0.5 mg/mL)
- Measurement temperature: 140°C
- Flow rate: 1 mL/min
- Sample concentration: 1 mg/mL
- Injection volume: 0.2175 mL

To obtain the $M_{abs}$ and root-mean-square radius of gyration (Rg) obtained from the MALLS and the intrinsic viscosity ([η]) obtained from the viscometer, calculation is carried out by reference to the following references, using ASTRA version 4.73.04 (data processing software included in the MALLS).

References:

1. Developments in Polymer Characterization, Vol. 4. Essex: Applied Science; 1984. Chapter 1.
2. Polymer, 45, 6495-6505 (2004)
3. Macromolecules, 33, 2424-2436 (2000)
4. Macromolecules, 33, 6945-6952 (2000)

The g' is calculated as the ratio $([\eta]_{br}/[\eta]_{lin})$ of the intrinsic viscosity $([\eta]_{br})$ obtained by measuring the sample by the viscometer to the intrinsic viscosity $([\eta]_{lin})$ separately obtained by measuring the linear polymer.

As the linear polymer, a commercially-available homopolypropylene (NOVATEC-PP (registered trademark) manufactured by Japan Polypropylene Corporation, grade FY6) is used to obtain $[\eta]_{lin}$. The fact that the log of the linear polymer $[\eta]_{lin}$ has a linear relationship with the log of the molecular weight, is known as the Mark-Houwink-Sakurada equation. Accordingly, the value of $[\eta]_{lin}$ can be obtained by appropriate extrapolation into the low-molecular-weight side or the high-molecular-weight side.

In the present invention, as with the above-described property (2), the g'$(100\times10^4)$, g'$(Mw_{abs})$ and g'$(Mw_{abs})$-g'$(100\times10^4)$ of the branched propylene-based polymer can be adjusted by controlling the polymerization conditions such as the catalyst species selection, the polymerization temperature, the monomer concentration and the hydrogen amount. Of them, they are preferably adjusted by the catalyst species selection, without any particular limitation. It is appropriate to adjust them by the catalyst species selection in the macromonomer copolymerization method using a catalyst containing several metallocene compounds.

Among them, the g'$(Mw_{abs})$-g'$(100\times10^4)$ satisfying the formula (3) or (3-2) is preferably adjusted by the catalyst selection by several catalyst species or several metallocene compounds.

For example, when a catalyst by a single catalyst species or single metallocene compound (hereinafter, it may be referred to as "single catalyst") is used, which is not a catalyst by several catalyst species or several metallocene compounds, it is thought that the formula (3) or (3-2) is not satisfied. The reason is presumed as follows. Since the molecular weight distribution of a macromonomer produced by the single catalyst is narrow, a macromonomer having a largely different molecular weight is not supplied; therefore, the value obtained by the formula (3) is small, or the value obtained by the formula (3-2) is large. Taking Reference Example 2 as an example (see Table 2), since the g' $(Mw_{abs})$ is large, it is estimated that the $Mw_{abs}$ does not include a component having a short branched chain, and the molecular weight of the macromonomer produced by this catalyst is large. On the other hand, since the g'$(100\times10^4)$ is small, it is estimated that there is a branched component by a macromonomer having a large molecular weight in the high-molecular-weight region($M_{abs}$ = $100\times10^4$). As just described, by the single catalyst that produces a macromonomer having a narrow molecular weight distribution, for example, the g'$(Mw_{abs})$-g' $(100\times10^4)$ is increased, and the formula (3-2) is not satisfied.

Property (4):

In the branched propylene-based polymer of the present invention, the flow activation energy (Ea) kJ/mol obtained by measuring dynamic viscoelasticity and the MFR satisfy the following formula (1):

$$Ea \geq -12.5 \times \log(MFR) + 66 \quad \text{Formula (1).}$$

It has been empirically known since a long time ago, that an object's viscosity generally decreases with an increase in temperature, and the log lnη of the viscosity is proportional to the reciprocal 1/T of the absolute temperature and is represented by the following equation (Kagaku Jiten, Second Edition, "Andrade's viscosity equation").

[Math. 1]

$$\eta = B \times exp\left(\frac{Ea}{RT}\right)$$

B: Proportionality constant
Ea: Flow activation energy
R: Gas constant

This energy term Ea corresponds to the activation energy of the case where the reaction rate in the Arrhenius equation for a chemical reaction is regarded as flow, and it is referred to as "flow activation energy".

When the Ea is high, it means that the energy required for fluidization is large. In the case of the branched propylene-based polymer, it is thought that entanglement of the molecular chains increases when the amount of the branches is large or when the branch length is long, and the energy for flowing the molecular chains increases, accordingly. That is, the Ea mainly depends on the amount, length and so on of the long chain branches in the polymer.

For the purpose of obtaining the branched propylene-based polymer that is excellent in ductility when melting, while retaining fluidity and melt tension which are necessary for molding, the present invention was focused on the Ea as an index for obtaining appropriate branching characteristics and specified the relation between the Ea and the MFR.

In the branched propylene-based polymer of the present invention, from the viewpoint of the branching characteristics that can improve the ductility when melting, the Ea may be 55.0 kJ/mol or more, or it may be 58.0 kJ/mol or more. On the other hand, the Ea may be 70.0 kJ/mol or less.

When the formula (1) is satisfied, it means the following: in the branched propylene-based polymer of the present invention, the Ea obtained by measuring the dynamic viscoelasticity is equal to or more than the specific value relative to the MFR.

In the branched propylene-based polymer of the present invention, the value of the Ea relative to the MFR is different from that of conventional propylene-based polymers, that is, the Ea satisfies the formula (1).

When the Ea is too small relative to the MFR, the branch properties including the amount, length and distribution of the branches become inappropriate, and the ductility when melting deteriorates. Accordingly, the branched propylene-based polymer of the present invention satisfies the above-described formula (1).

More preferably, the branched propylene-based polymer of the present invention may satisfy the following formula (1-2).

$$Ea \geq -12.5 \times \log(MFR) + 72 \quad \text{Formula (1-2)}.$$

In general, as the fluidity of the melted resin improves, the Ea deteriorates. Accordingly, there is a demand for a propylene-based polymer having both the necessary fluidity and the Ea which serves as the index of a branch property suitable for improving the ductility when melting. The branched propylene-based polymer satisfying the formula (1) while having excellent fluidity, is a polymer that could not be achieved with conventional branched propylene-based polymers, and it can be said to be a polymer having a high degree of balance between the fluidity of the melted resin and the branch property. Considering that the Ea is a function negatively correlated with an increase in the MFR, and based on the data of Examples and the data of Comparative Examples 1, 2 and 3 having the same level of fluidity as Examples, the relational formula between the Ea and the MFR, which distinguishes between Examples that can solve the problems and Comparative Examples of the prior art that cannot solve the problems, was determined approximately (see FIG. 4).

In the branched propylene-based polymer of the present invention, the branching characteristics including the amount, length and distribution of the branches are suitable for improving the ductility when melting. Accordingly, it is estimated that the flow activation energy (Ea) relative to the MFR is high.

When the value of the Ea relative to the MFR is high, it is thought that extrusion load can be more reduced during molding, compared to a branched propylene-based polymer having the same MFR.

Since the branched propylene-based polymer of the present invention satisfies the formula (1), the ductility can be increased while reducing the extrusion load during molding.

The value of the upper limit of the Ea relative to the MFR, is not particularly limited. It may be a value that satisfies the following formula (1-3), or it may be a value that satisfies the following formula (1-4).

$$Ea \leq -12.5 \times \log(MFR) + 82 \quad \text{Formula (1-3)}$$

$$Ea \leq -12.5 \times \log(MFR) + 77 \quad \text{Formula (1-4)}$$

The Ea is a value calculated by, in melt viscoelasticity measurement, the Arrhenius equation using a shift factor (aT) in creating a master curve, based on the temperature-time superposition principle. In the present invention, the master curve is a curve that indicates the angular frequency (unit: rad/sec) dependence of a melt complex viscosity (unit: Pa·sec) at 200°C. The Ea is obtained by the following method.

First, the melt complex viscosity-angular frequency curves of the branched propylene-based polymer are obtained at the following three temperatures (T, unit: °C): 180°C, 200°C and 220°C. Based on the temperature-time superposition principle, each melt complex viscosity-angular frequency curve is superposed on the melt complex viscosity-angular frequency curve at 200°C, thereby obtaining a shift factor (aT) at each temperature. From each temperature (T) and the "aT" at that temperature (T), the linear approximation formula of [ln(aT)] and [1/(T+273.16)] (the following formula (4)) is calculated by the least squares method. Next, the Ea is obtained by the following formula (5)

where "m" is the slope of the linear approximation formula.

$$\ln(aT) = m(1 / (T + 273.16)) + n \quad \text{Formula (4)}$$

$$Ea = |0.008314 \times m| \quad \text{Formula (5)}$$

aT: Shift factor
Ea: Flow activation energy (unit: kJ/mol)
T: Temperature (unit: °C)

In the above calculation, a commercially-available software may be used. As the software, examples include TRIOS (manufactured by TA Instruments).

Note that "aT" is the amount of movement in the x-axis direction when the double logarithmic curve of melt complex viscosity versus angular frequency at each temperature (T) is moved in the x-axis (angular frequency) and y-axis (melt complex viscosity) direction and superposed on the melt complex viscosity-angular frequency curve at 200°C.

The measurement of the melt complex viscosity-angular frequency curve is carried out in the following condition, using a viscoelasticity measuring device (such as ARES-G2 manufactured by TA Instruments) under a nitrogen atmosphere.

While preventing air bubbles from entering, compression molding of the propylene-based polymer is conducted by pressing at 180°C for 5 minutes, thereby obtaining a disk-shaped measurement sample having a thickness of 2.0 mm and a diameter of 25 mm. The measurement of the sample is performed after compressing the measurement sample of 2.0 mm in thickness to 1.5 mm in thickness, using parallel circular plates with a diameter of 25 mm kept at the following three temperatures: 180°C, 200°C and 220°C.

- Geometry: Parallel plates
- Plate diameter: 25 mm
- Plate gap: 2 mm
- Strain: 5%
- Angular frequency: 0.01 rad/sec to 100 rad/sec

In the present invention, the Ea and MFR of the branched propylene-based polymer can satisfy the formula (1) by controlling, as with the above-described property (2), the polymerization conditions such as the catalyst species selection, the polymerization temperature, the monomer concentration and the hydrogen amount. Of them, they are preferably adjusted by the catalyst species selection, without any particular limitation. It is appropriate to adjust them by the catalyst species selection in the macromonomer copolymerization method using a catalyst containing several metallocene compounds.

In contrast, when a single catalyst is used, it seems difficult to satisfy all of the following: the copolymerizability of the macromonomer is high; the molecular weight of the macromonomer is high; and the macromonomer production rate is high. Accordingly, when the single catalyst is used, it is thought that since the amount of the long chain branches (LCB) in the polymer is small, or since the branch length is short, the Ea is small. For example, as shown in Reference Example 2, when the terminal vinyl rate is low, that is, when the macromonomer production rate in the polymer is low and the LCB amount is small, the Ea is small.

Property (5):

In the branched propylene-based polymer of the present invention, the mesotriad fraction (mm) measured by $^{13}C$-NMR is preferably 95.0% or more and less than 99.0%, and

Property (5-2):

Also in the branched propylene-based polymer of the present invention, the heterologous bond ([2,1 bond]) amount is preferably in a range of from 0 mol % to 0.30 mol %, and the heterologous bond ([1,3 bond]) amount is preferably in a range of from 0 mol % to 0.25 mol %.

The crystallinity of the branched propylene-based polymer is susceptible to the stereoregularity that is expressed as a mesotriad fraction (mm) or mesopentad fraction (mmmm) and the regioregularity that is expressed as a [2,1 bond] and a [1,3 bond]. That is, the crystallization is developed by folding back a lamella at a regularity absent part (such as a stereoirregular bond and a heterologous bond part).

When the stereoregularity and regioregularity of the branched propylene-based polymer of the present invention are in the above-described ranges, it is considered that the crystallization process resulting from shear or elongational deformation improves the fluidity and melt tension during gradual cooling and solidification of the resin in the molding process.

To improve the melt tension during the solidification, accordingly, the mm of the branched propylene-based polymer of the present invention is preferably 95.0% or more, more preferably 96.0% or more, and still more preferably 97.0% or more.

On the other hand, when the mm is too high, there is an increase in rigidity or Young's modulus, and the stiffness of a film may be too high. Accordingly, the mm of the branched propylene-based polymer of the present invention is preferably less than 99.0%, more preferably 98.5% or less, and still more preferably 98.2% or less.

As well as above, from the viewpoint of improving the melt tension during the solidification, the [2,1 bond] amount of the branched propylene-based polymer of the present invention is preferably from 0 mol % to 0.30 mol %, more preferably from 0 mol % to 0.25 mol %, still more preferably from 0 mol% to 0.20 mol %, even more preferably from 0.030 mol % to 0.25 mol %, and particularly preferably from 0.05 mol % to 0.20 mol %. The upper limit value of the [2,1 bond] amount may be 0.15 mol% or less. In the combination with the [2,1 bond] amount, the [1,3 bond] amount of the branched propylene-based polymer of the present invention is preferably from 0 mol % to 0.25 mol %, more preferably from 0 mol % to 0.20 mol %, still more preferably from 0 mol % to 0.15 mol %, even more preferably from 0.05 mol % to 0.20 mol %, and particularly preferably from 0.10 mol % to 0.15 mol %.

The method for measuring and calculating the mm measured by $^{13}C$-NMR, the [2,1 bond] amount and the [1,3 bond] amount are as follows.

First, 200 mg of a sample, 2.4 mL of a solvent (o-dichlorobenzene/deuterated benzene bromide ($C_6D_5Br$) in a volume ratio of 2/1) and hexamethyldisiloxane, which is a chemical shift standard, are put in an NMR sample tube (inner diameter 10 mm) and uniformly dissolved by a block heater at 150°C, thereby preparing a measurement sample.

($^1H$-NMR)

- Device: AV400 (product name, an NMR device manufactured by Bruker BioSpin K.K.)
- Probe: Cryoprobe (diameter 10 mm)
- Sample temperature: 120°C
- Pulse angle: 4.5°
- Pulse interval: 2 Seconds
- Accumulation times: 1024
- Chemical shift: The chemical shift of the proton signal of hexamethyldisiloxane is set to 0.09 ppm, and this is used as a chemical shift standard for the chemical shift of the signal of another proton.

($^{13}C$-NMR)

- Device: AV400 (product name, an NMR device manufactured by Bruker BioSpin K.K.)
- Probe: Cryoprobe (diameter 10 mm)
- Sample temperature: 120°C
- Pulse angle: 45°
- Pulse interval: 17.2 Seconds
- Accumulation times: 3072
- Decoupling condition: Broadband decoupling method
- Chemical shift: The chemical shift of the $^{13}C$ signal of hexamethyldisiloxane is set to 1.98 ppm, and this is used as a chemical shift standard for the chemical shift of the signal of another $^{13}C$.

The mesotriad fraction (mm) of propylene unit triad sequences is obtained by substituting the integrated intensity of a $^{13}C$ signal measured by $^{13}C$-NMR into the following formula (6).

$$mm\ (\%) = I_{mm} \times 100 / (I_{mm} + 3 \times I_{mrrm}) \quad \text{Formula (6)}$$

In the formula, $I_{mm}$ is the integrated intensity of the $^{13}C$ signal that the propylene unit triad sequences are assigned to the bonding type of the mm, and it is calculated as the integrated intensity of the signal that the chemical shift

ranges from 23.6 ppm to 21.1 ppm (hereinafter, it will be expressed as "$I_{23.6-21.1}$"). $I_{mrrm}$ is the integrated intensity of the $^{13}C$ signal that the propylene unit pentad sequences are assigned to the bonding type of the mrrm, and it is a value expressed as "$I_{19.9-19.7}$".

Spectrum assignment can be carried out with reference to the following documents:

"Polymer Journal", volume 16, p. 717 (1984), Asakura Shoten Publishing Co., Ltd.,
"Macromolecules", volume 8, p. 687 (1975), and
"Polymer", volume 30, p. 1350 (1989).

The chemical shift range is slightly shifted by the molecular weight of a polymer or the like. However, the region can be easily identified.

The [2,1 bond] amount and the [1,3 bond] amount are obtained by the following formulae, using the integrated intensity of the $^{13}C$ signal measured by $^{13}C$-NMR.

$$\text{The [2,1 bond] amount (mol \%)} = I_{2,1\text{-}P} \times 100 / (I_{1,2\text{-}P} + I_{2,1\text{-}P} + I_{1,3\text{-}P})$$

$$\text{The [1,3 bond] amount (mol \%)} = I_{1,3\text{-}P} \times 100 / (I_{1,2\text{-}P} + I_{2,1\text{-}P} + I_{1,3\text{-}P})$$

In the formulae, $I_{1,2\text{-}P}$, $I_{2,1\text{-}P}$ and $I_{1,3\text{-}P}$ are the integrated intensity of the $^{13}C$ signal that the propylene unit is assigned to the bonding type of the [1,2 bond], the integrated intensity of the $^{13}C$ signal that the propylene unit is assigned to the bonding type of the [2,1 bond], and the integrated intensity of the $^{13}C$ signal that the propylene unit is assigned to the bonding type of the [1,3 bond], respectively. They are obtained as follows:

$$I_{1,2\text{-}P} = I_{48.80\text{-}44.50}$$

$$I_{2,1\text{-}P} = (I_{34.68\text{-}34.63} + I_{35.47\text{-}35.40} + I_{35.94\text{-}35.70}) / 2$$

$$I_{1,3\text{-}P} = I_{37.50\text{-}37.20} / 2.$$

The properties (5) and (5-2) can be satisfied by controlling the polymerization conditions such as the catalyst species selection, the polymerization temperature, the monomer concentration and the hydrogen amount.

Property (6):

From the point of view that the branched propylene-based polymer of the present invention keeps high melt tension during molding, the number of the long-chain branches (LCB number) measured by $^{13}C$-NMR is preferably from 0.1/1000 monomers to 0.5/1000 monomers, and more preferably from 0.2/1000 monomers to 0.5/1000 monomers.

The LCB number is the number per 1000 propylene monomers calculated by the following formula using, when the methylene carbon intensity of the propylene main chain of 49.00 ppm to 44.33 ppm by $^{13}C$-NMR is normalized to 1000, the signal integrated intensities of the carbon (methine carbon) of the branch point of 31.72 ppm to 31.66 ppm and the three methylene carbons bound to the carbons (methine carbons) of the branch points of 44.09 ppm to 44.03 ppm, 44.78 ppm to 44.72 ppm, and 44.90 ppm to 44.84 ppm.

$$\text{LCB number} = [(I_{44.09\text{-}43.03} + I_{44.78\text{-}44.72} + I_{44.90\text{-}44.84} + I_{31.72\text{-}31.66}) / 4] / I_{49.00\text{-}44.33}$$

The $^{13}C$-NMR measurement for obtaining the LCB number can be carried out in the same manner as the $^{13}C$-NMR measurement of the property (5), except for changing the following measurement conditions as follows:

- Pulse interval: 4.2 seconds
- Accumulation times: 20000

As with the above-described property (4), the property (6) can be satisfied by controlling the polymerization conditions such as the catalyst species selection, the polymerization temperature, the monomer concentration and the hydrogen amount.

Property (7):

In the branched propylene-based polymer of the present invention, in the elution curve obtained by temperature rising elution fractionation measurement with o-dichlorobenzene, the amount of the component eluted at a temperature of 40°C or less, is preferably from 0.1 mass % to 2.5 mass %.

The component eluted at 40°C or less is a low-crystalline component. When the amount of this component is large, the branched propylene-based polymer may have reduced crystallinity, resulting in a product with reduced heat resistance and rigidity. On the other hand, when the amount of this component is small, the branched propylene-based polymer formed into a film obtains excessively high rigidity and poor texture.

In the branched propylene-based polymer of the present invention, accordingly, the amount of the component eluted at a temperature of 40°C or less is preferably 2.5 mass % or less, more preferably 2.0 mass % or less, still more preferably 1.0 mass % or less, and particularly preferably 0.7 mass % or less.

On the other hand, when the amount of the component eluted at 40°C or less is too small, for example, the branched propylene-based polymer formed into a laminate may obtain excessively high rigidity and, as a result, poor texture (e.g., unpleasant touch). In the branched propylene-based polymer of the present invention, accordingly, the amount of the component eluted at a temperature of 40°C or less is preferably 0.1 mass % or more, and more preferably 0.2 mass % or more.

The details of the method for measuring the component eluted by TREF are as follows.

First, a sample is dissolved at 140°C in ODCB to obtain a solution. The solution is introduced into a TREF column at 140°C. The column is cooled down to 100°C at a temperature decrease rate of 8°C/min; the column is further cooled down to 40°C at a temperature decrease rate of 4°C/min; and then the column is kept at 40°C for 10 minutes. Then, a solvent (ODCB) is discharged into the column at a flow rate of 1 mL/min for 10 minutes, while keeping the column at 40°C; moreover, the solvent is discharged into the column at the same flow rate for 60 minutes, while increasing the column temperature linearly from 40°C to 140°C at a temperature increase rate of 100°C/60 min, thereby eluting the sample to obtain an elution curve. The ratio of the elution amount of the component eluted at a temperature of 40°C to the whole elution amount, is obtained as the amount (mass %) of the component eluted at a temperature of 40°C or less.

- Column size: 4.3 mm (Diameter) × 150 mm
- Column filler: 100 μm Surface-deactivated glass beads
- Solvent: ODCB
- Sample concentration: 5 mg/mL
- Injected sample amount: 0.1 mL
- Solvent flow rate: 1 mL/min
- Detector: MIRAN-1A IR detector manufactured by FOXBORO (measurement wavelength: 3.42 μm)

In general, the amount of the component which is soluble at 40°C or less from the branched propylene-based polymer in the TREF using ODCB, can be kept low by use of the metallocene compound as a polymerization catalyst component. It is preferable that the amount of an isomer incorporated in the complex of the catalyst is kept low; in the catalyst production, the metallocene catalyst is brought into mild contact with the organoaluminum compound; and the temperature condition of the polymerization reaction is not extremely high.

Property (8):

In the branched propylene-based polymer of the present invention, the strain hardening index (SHI@1s$^{-1}$) at a strain rate (dε/dt) of 1.0/sec is preferably from 0.70 to 2.50.

As used herein, the SHI@1s$^{-1}$ is a slope when, in the measurement of elongational viscosity ($\eta_E$) at a temperature of 180°C and a strain rate of 1.0/sec, plotting the logarithm of Hencky strain (log(ε)) on the x-axis and the logarithm of elongational viscosity (log($\eta_E$)) on the y-axis in an interval between Hencky strains 1 and 3.

From the viewpoint of improving the moldability by increasing the melt tension and from the viewpoint of improving the ductility, the SHI@1s$^{-1}$ of the branched propylene-based polymer of the present invention is preferably from 0.70 to 2.50, more preferably from 0.80 to 2.00, and still more preferably from 1.00 to 1.80.

When the SHI@1s$^{-1}$ of the branched propylene-based polymer is large to a certain degree, the elongational viscosity increases since the components that are not relaxed at a fast strain rate are present in the polymer. Accordingly, compared to a linear polymer having no strain hardenability at a fast strain rate or to a polymer having a small SHI@1s$^{-1}$,

the elongational viscosity of the branched propylene-based polymer becomes high and leads to an increase in the melt tension. As a result, the moldability is thought to improve in sheet molding, blow molding, heat molding and foam molding.

Based on this point of view, the SHI@$1s^{-1}$ of the branched propylene-based polymer of the present invention is preferably 0.70 or more.

When the SHI@$1s^{-1}$ of the branched propylene-based polymer is appropriately large, the amount of unrelaxed components or the amount of components having a long relaxation time is appropriately retained; the progress of local orientational crystallization starting from the molecular chain entanglement points is suppressed; and the ductility is retained. From this viewpoint, the SHI@$1s^{-1}$ of the branched propylene-based polymer of the present invention is preferably 2.50 or less.

The strain hardening index (SHI) can be obtained by the uniaxial elongational viscosity measurement as described in Polymer, Vol. 42, p. 8663 (2001). In the present invention, the SHI@$1s^{-1}$ is measured by the following method.

- Device: ARES-G2 manufactured by TA Instruments
- Jig: EXTENTIONAL VISCOSITY FIXTURE manufactured by TA Instruments
- Measurement temperature: 180°C
- Strain rates: 1.0/sec
- Production of test piece: A 18 mm × 10 mm sheet (thickness 0.7 mm) is produced by press molding.

The SHI is obtained as follows. By the above measurement method, the data on time-dependent changes in the elongational viscosity are obtained at a given strain rate; the measured data are plotted on a graph with log($\varepsilon$) on the x-axis and log($\eta_E$) on the y-axis; the slope of the elongational viscosity in the interval between Hencky strains 1 and 3, is specified from the graph; and the slope is determined as the SHI at the strain rate in the measurement condition.

As with the above-described property (4), the property (8) can be satisfied by controlling the polymerization conditions such as the catalyst species selection, the polymerization temperature, the monomer concentration and the hydrogen amount.

Property (9):

From the viewpoint of achieving excellent ductility when melting, the multi-branching index (MBI) of the branched propylene-based polymer is preferably 0.20 or more. From the viewpoint of obtaining the stability of the melt tension by suppressing the strain rate dependence of the strain hardening index, the multi-branching index (MBI) of the branched propylene-based polymer of the present invention is preferably 1.00 or less. The lower limit of the MBI is more preferably 0.26 or more. On the other hand, the upper limit is more preferably 0.80 or less, and still more preferably 0.60 or less.

The MBI is a slope when obtaining the SHI of a polymer at a strain rate of from 0.1/sec to 10/sec and plotting the logarithm of a strain rate (log(d$\varepsilon$/dt)) on the x-axis and the SHI at a strain rate of from 0.1/sec to 10/sec on the y-axis.

The SHI of a polymer changes by the strain rate. The MBI indicates the dependence of the SHI on the strain rate, and it means that as the value of the MBI increases, the SHI largely increases along with an increase in the strain rate.

The MBI is obtained as follows. The SHI is measured at several strain rates in a range of from 0.1/sec to 10/sec; the SHIs measured at the strain rates are plotted on the graph with the log(d$\varepsilon$/dt) on the x-axis and the SHI on the y-axis; and the slope of the approximate straight line of the plot in a range of strain rate of from 0.1/sec to 10/sec, is determined as the MBI. In the present invention, the plot of three points (SHI@$0.1s^{-1}$, SHI@$1.0s^{-1}$ and SHI@$10.0s^{-1}$) is approximated to be a straight line by the least-squares method, and the slope of the straight line was determined as the MBI.

As with the above-described property (4), the property (9) can be satisfied by controlling the polymerization conditions such as the catalyst species selection, the polymerization temperature, the monomer concentration and the hydrogen amount.

Property (10):

From the viewpoint of obtaining the propylene-based polymer that is, while retaining melt tension necessary for molding, excellent in ductility, the melt tension at 230°C (MT230) of the branched propylene-based polymer of the present invention, may be from 0.3 g to 15 g, or it may be from 0.5 g to 15 g.

The MT230 is a tension detected by a pulley when the resin is extruded in a string form and wound onto a roller under the following conditions using a melt tension tester (such as CAPILOGRAPH 1B manufactured by Toyo Seiki Seisaku-sho, Ltd.)

- Resin temperature: 230°C
- Capillary: 2.0 mm in diameter, 40 mm in length
- Cylinder diameter: 9.55 mm
- Cylinder extrusion speed: 20 mm/min
- Winding speed: 4.0 m/min

When the resin breaks at a winding speed of 4.0 m/min, the melt tension is considered as "non-evaluable".

Property (11):

In the branched propylene-based polymer of the present invention, the maximum drawing rate (MaxDraw) (m/min) at 230°C and the MFR may satisfy the relation represented by the following formula (7).

$$(\text{MaxDraw}) > 200 \times \log(\text{MFR}) - 38 \quad \text{Formula (7)}$$

The MaxDraw is a drawing rate just before a string-shaped resin is broken when, in melt tension measurement, the drawing rate is gradually increased from 4.0 m/min at an acceleration rate of 18.1 mm/sec$^2$, while extruding a resin in a string form and drawing and winding the string-shaped resin on a roller.
When the string-shaped resin is broken at a drawing rate of 4.0 m/min, it is considered as "non-evaluable".
The melt-ductility can be evaluated using the MaxDraw as an index. Higher MaxDraw means better ductility. In the present invention, the MaxDraw is measured in the following condition.

- Device: Capillary rheometer CEAST SR50 manufactured by INSTRON
- Capillary: 2.0 mm in diameter, 40 mm in length
- Barrel diameter: 15 mm
- Barrel length: 290 mm
- Cylinder extrusion speed: 20 mm/min
- Resin temperature: 230°C

In general, there is the following problem: as the fluidity increases, the ductility improves while the melt tension decreases; meanwhile, when the fluidity is increased for excellent ductility, the melt tension become insufficient. Accordingly, the branched propylene-based polymer of the present invention is required to be a propylene-based polymer having both melt tension necessary for molding and excellent ductility. The formula of MaxDraw-MFR relation defined in the above formula (7) can be used as an index of the ductility relative to the fluidity. Satisfying the formula (7) indicates the following: compared to conventional propylene-based polymers, the branched propylene-based polymer of the present invention is excellent in the ductility relative to the fluidity.
That is, to differentiate the branched propylene-based polymer of the present invention from conventional propylene-based polymers, considering that the melt-ductility (MaxDraw) is a function positively correlated with an increase in the fluidity (MFR), the parameters of the function are set, and it is shown that relative to the MFR, the MaxDraw of the branched propylene-based polymer of the present invention is larger than the MaxDraw of conventional propylene-based polymers, which is defined by the function. More specifically, based on the data of Examples and Comparative Examples, the value of the MaxDraw and that of the MFR are assumed, which distinguish between Examples and Comparative Examples (the prior art), and then, the parameters of the relational formula established between the MaxDraw and the MFR are determined by the least-squares method (see FIG. 5).

II. Method for producing the branched propylene-based polymer

The method for producing the branched propylene-based polymer of the present invention is not particularly limited, as long as it is a method by which a branched propylene-based polymer having the above-described properties of the present invention, is obtained. An appropriate method is a macromonomer copolymerization method using a catalyst containing several metallocene compounds.
In the present invention, the mechanism of the macromonomer copolymerization method using several metallocene compounds, is presumed as follows.
The following polymerization behavior is exhibited when polymerization is initiated by use of a catalyst containing a metallocene compound that forms a catalyst that mainly produces a macromonomer (hereinafter, the metallocene compound will be referred to as "compound 1") and a metallocene compound that forms a catalyst that mainly copolymerizes a macromonomer and a propylene monomer and produces a polymer having a branched chain (the metallocene compound will be referred to as "compound 2").

To put it simply, by use of the propylene polymerization catalyst containing the compounds 1 and 2, a polymer having a breadth which includes such a molecular weight region, that the molecular weight and molecular weight distribution of the polymer produced from the catalyst containing the compound 1 (hereinafter, the catalyst will be referred to as "catalyst 1") and the molecular weight and molecular weight distribution of the polymer produced from the catalyst containing the compound 2 (hereinafter, the catalyst will be referred to as "catalyst 2") are overlaid on one another, is obtained.

In the process of forming the branched structure, when the polymer produced from the catalyst 1 contains a terminal vinyl group, the terminal vinyl group-containing polymer becomes a macromonomer (hereinafter, the macromonomer will be referred to as "macromonomer 1"). In addition, a copolymer of propylene and the macromonomer 1 is produced from the catalyst 1; and a copolymer of propylene and the macromonomer 1 is produced from the catalyst 2.

When the polymer produced from the catalyst 2 contains a terminal vinyl group, the terminal vinyl group-containing polymer becomes a macromonomer (hereinafter, the macromonomer will be referred to as "macromonomer 2"). In addition, a copolymer of propylene and the macromonomer 2 is produced from the catalyst 1, and a copolymer of propylene and the macromonomer 2 is produced from the catalyst 2.

When the polymer produced from the catalyst 1 and the polymer produced from the catalyst 2 become the macromonomer 1 and the macromonomer 2, respectively, a copolymer of propylene, the macromonomer 1 and the macromonomer 2 is further produced from the catalyst 1, and a copolymer of propylene, the macromonomer 1 and the macromonomer 2 is further produced from the catalyst 2.

As just described, depending on the molecular weight, molecular weight distribution and terminal vinyl rate of the polymer produced from the catalyst 1, the copolymerizability of the catalyst 1, the molecular weight, molecular weight distribution and terminal vinyl rate of the polymer produced from the catalyst 2, the copolymerizability of the catalyst 2, the ratio between the amounts of the catalysts 1 and 2, the steric positional relationship between the catalysts 1 and 2, and so on, the average molecular weight, high molecular weight and very high molecular weight of the branched propylene-based polymer, which is a final product, are changed. In addition, the amount and distribution of the branches of the branched propylene-based polymer are changed. That is, Mn, Mw, Mz, $W100\times10^4$, $W200\times10^4$, $g'(100\times10^4)$ and $g'(Mw_{abs})$, $[g'(Mw_{abs})-g'(100\times10^4)]$, Ea, SHI, MBI and MT of the branched propylene-based polymer are thought to be changed.

A preferable method for producing the branched propylene-based polymer of the present invention is not limited by the mechanism. As the method, examples include, but are not limited to, the method described below.

In the method for producing the branched propylene-based polymer of the present invention, from the viewpoint of ease of satisfying the above-mentioned properties, the two catalyst components for producing the macromonomer, that is, the components [A-1] and [A-2] are preferably used, and the polymerization is preferably carried out by use of the polymerization catalyst, which is obtained by combining the components [A-1] and [A-2] so that the type, amount and amount ratio thereof satisfy the following conditions.

a) The molecular weight of the polymer produced from the component [A-2] is higher than that of the polymer produced from the component [A-1].

b) The ratio of the terminal vinyl of the polymer produced from the component [A-1] is larger than that of the polymer produced from the component [A-2].

c) The component [A-2] has better macromonomer copolymerizability than the component [A-1].

By using the polymerization catalyst obtained by combining the components [A-1] and [A-2] satisfying the conditions a), b) and c), the branched propylene-based polymer of the present invention can be easily produced, which has the properties (1) to (4), which has a branched propylene structure different from the prior art, especially molecular weight distribution and branch distribution, and in which the Ea relative to the MFR is high.

By using the polymerization catalyst obtained by combining the components [A-1] and [A-2] satisfying the conditions a), b) and c), the branched propylene-based polymer of the present invention can be produced, which contains multi-branching molecules having the molecular structure in which many branched chains are introduced in the medium-molecular-weight to high-molecular-weight region, while having the branch distribution in which the content of unrelaxed components or components having a long relaxation time is small.

In the branched propylene-based polymer of the present invention, by using the polymerization catalyst obtained by combining the components [A-1] and [A-2] satisfying the conditions a), b) and c), in the region where $M_{abs} = 100\times10^4$ (the high-molecular-weight side) of the region ranging from the $Mw_{abs}$ region to the region where $M_{abs} = 100\times10^4$, both of which are measured by use of a light scattering detector (MALLS), the ratio of the polymer produced from the component [A-2] increases. To the contrary, in the $Mw_{abs}$ region (the low-molecular-weight side), the ratio of the polymer produced from the component [A-1] increases.

Since the conditions a) and b) are satisfied, a large amount of macromonomer having a relatively small molecular weight (macromonomer 1) is produced from the component [A-1], and a macromonomer having a relatively large molecular weight (macromonomer 2) is produced from the component [A-2].

In terms of the branched component, in the region where $M_{abs} = 100\times10^4$, the ratio of the branch component produced by copolymerizing propylene, the macromonomer 1 and the macromonomer 2 by the component [A-2] is high. Meanwhile, in the $Mw_{abs}$ region, the ratio of the branch component produced by copolymerizing propylene, the macromonomer 1 and the macromonomer 2 by the component [A-1] is high.

In addition, since the condition c) is satisfied, it is thought that in the $Mw_{abs}$ region, the macromonomer copolymerizability by the component [A-1] is poor, and a decrease in the $g'(Mw_{abs})$ can be suppressed, accordingly. In the region where $M_{abs} = 100\times10^4$, the component [A-2] more efficiently copolymerizes both the macromonomer 1 and the macromonomer 2, thereby decreasing the $g'(100\times10^4)$. As a result, it is thought that the branched propylene-based polymer such that the value of $g'(Mw_{abs})-g'(100\times10^4)$ ranges from 0.10 to 0.20 can be produced.

II-1. Polymerization catalyst

The propylene polymerization catalyst used to produce the branched propylene-based polymer of the present invention preferably comprises the following components [A-1], [A-2], [B] and [C].

Component [A-1]: A metallocene compound which gives, when propylene is homopolymerized at 70°C, a propylene homopolymer a-1 having a terminal vinyl rate (Rv) of 0.5 or more

Component [A-2]: A metallocene compound which gives, when propylene is homopolymerized at 70°C, a propylene homopolymer a-2 such that the Mn is larger than the propylene homopolymer a-1, and the Rv is 0.1 or more and less than 0.5

Component [B]: A compound or layered silicate which is reactive with the components [A-1] and [A-2] to form an ion pair

Component [C]: An organoaluminum compound

II-1-1. Component [A-1]

The component [A-1] is a metallocene compound which gives, when propylene is homopolymerized at 70°C, a propylene homopolymer a-1 having a Rv of 0.5 or more. The component [A-1] is a metallocene compound which gives a Rv of preferably 0.65 or more, more preferably 0.75 or more, and ideally 1.0 (one of the two terminals of all the molecular chains has a vinyl structure). A macromonomer synthesis process can be more efficiently implemented by use of the metallocene compound that forms the polymerization catalyst that produces the propylene homopolymer having a higher Rv.

The terminal vinyl rate (Rv) and the terminal vinylidene rate (Rvd) are determined by the following formulae.

$$Rv = [Vi] / \{(\text{Total terminal number} - \text{LCB number}) / 2\}$$

$$Rvd = [Vd] / \{(\text{Total terminal number} - \text{LCB number}) / 2\}$$

(where [Vi] is the number of terminal vinyl groups per 1000 monomers calculated by $^1$H-NMR; [Vd] is the number of terminal vinylidene groups per 1000 monomers calculated by $^1$H-NMR; the total terminal number is the total number of terminals per 1000 monomers calculated by $^1$H-NMR and $^{13}$C-NMR; and the LCB number is the number of LCBs per 1000 monomers calculated by $^{13}$C-NMR).

[Relationship between the reaction mechanism and the terminal structure]

The relationship between the reaction mechanism and terminal structure of the propylene homopolymerization will be described below.

In propylene polymerization, generally, a chain transfer reaction called β-hydrogen elimination is initiated as a termination reaction, and a polymer which has the propyl-vinylidene structure (vinylidene structure) represented by the structural formula (1-b) as the terminating terminal, is produced. In the case of using hydrogen, generally, chain transfer to hydrogen is preferentially initiated, and a polymer which has the i-butyl structure represented by the structural formula (1-c) as the terminating terminal, is produced. In the case of using a catalyst which contains a metallocene compound having a specific structure, a specific chain transfer reaction called β-methyl elimination is initiated, and a polymer which has the 1-propenyl structure (vinyl structure) represented by the structural formula (1-a) as the terminating terminal, is produced (reference: Macromol. Rapid Commun. 2000, 21, 1103-1107).

As the terminating terminal, the n-butyl structure represented by the structural formula (1-e) is produced when, in

rare cases, chain transfer by hydrogen occurs after an irregular propylene insertion. Also, as the terminating terminal, a slight amount of the 1-butenyl structure represented by the structural formula (1-f) or a slight amount of the terminal vinylene structure (2-butenyl structure) represented by the structural formula (1-g) are thought to be produced when β-hydrogen elimination occurs after an irregular propylene insertion.

The initiating terminal becomes the n-propyl structure represented by the structural formula (1-h) when the first propylene is inserted into the central metal after chain transfer by hydrogen or β-hydrogen elimination occurs as the termination reaction, or the initiating terminal becomes the i-butyl structure represented by the structural formula (1-c) when the first propylene is inserted into the central metal after β-methyl elimination occurs as the termination reaction.

The initiating terminal becomes the 2,3-dimethylbutyl structure represented by the structural formula (1-i) when, in rare cases, the first propylene is irregularly inserted into the central metal after chain transfer by hydrogen occurs as the termination reaction or after β-hydrogen elimination occurs as the termination reaction, or the initiating terminal becomes the 3,4-dimethylpentyl structure represented by the structural formula (1-j) when, in rare cases, the first propylene is irregularly inserted into the central metal after β-methyl elimination occurs as the termination reaction.

All of the initiating terminals become saturated terminals. Accordingly, one polymer chain does not have two unsaturated terminals at the same time.

Also, a polymer having the i-butenyl structure represented by the structural formula (1-d) at a terminal may be produced by isomerization.

The internal vinylidene structure represented by the structural formula (1-k) is an olefin structure produced inside the polymer chain when propylene is further inserted into an intermediate which is formed by hydrogen desorption after the production of an unsaturated terminal.

Accordingly, among the above structural formulae, the structural formula (1-c) and the structural formula (1-h) become a main saturated terminal each by the main reaction, and the structural formula (1-a) and the structural formula (1-b) become a main unsaturated terminal each by the main reaction. The number of other terminal structures is very small compared to the number of the main terminal structures.

The polymer having, among the above terminal structures, the structures represented by the structural formulae (1-a) and (1-f) at the terminal can be a macromonomer. The structural formulae (1-a) and (1-f) have in common that two carbons at the most terminal have a vinyl structure; moreover, the structural formulae (1-a) and (1-f) have no difference in the function of being copolymerizable.

However, the 1-propenyl structure is a terminal which is produced as a result of β-methyl elimination that occurs after a regular propylene insertion; meanwhile, the 1-butenyl structure is a structure which is produced as a result of a side reaction in which, in rare cases, β-hydrogen elimination occurs after an irregular propylene insertion. Accordingly, the amount of the 1-butenyl structure is presumed to be very small with respect to the amount of the 1-propenyl structure. The ratio of production of the 1-butenyl structure to the-propenyl structure is thought to be similar to or less than the probability of the production of heterologous bonds. That is, most of the number [Vi] of the terminal vinyl groups is presumed to be the 1-propenyl structure resulting from β-methyl elimination that occurs after a regular propylene insertion.

[Chem. 1]

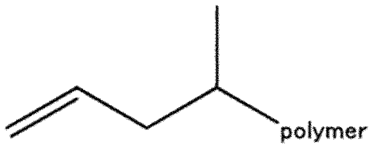

1-Propenyl Structural Formula (1-a)

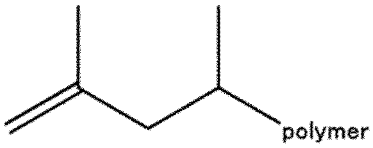

Vinylidene Structural Formula (1-b)

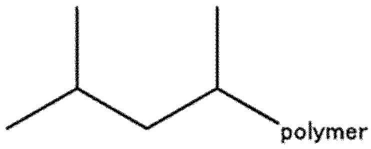

i-Butyl Structural Formula (1-c)

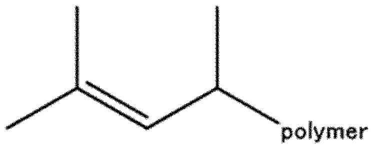

i-Butenyl Structural Formula (1-d)

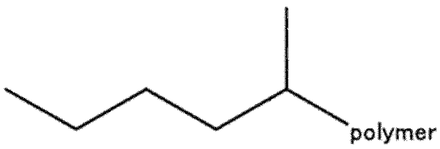

n-Butyl Structural Formula (1-e)

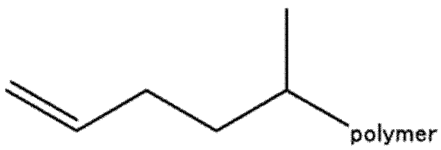

1-Butenyl Structural Formula (1-f)

[Chem. 2]

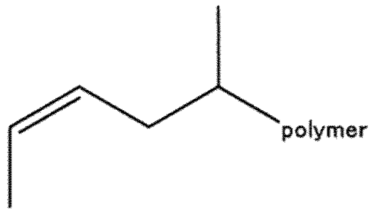

Terminal vinylene (2-butenyl) Structural Formula (1-g)

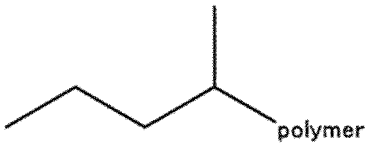

n-Propyl Structural Formula (1-h)

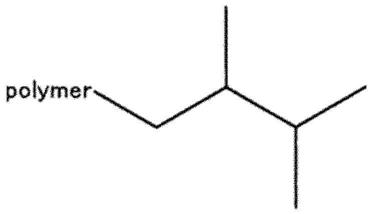

2,3-Dimethylbutyl Structural Formula (1-i)

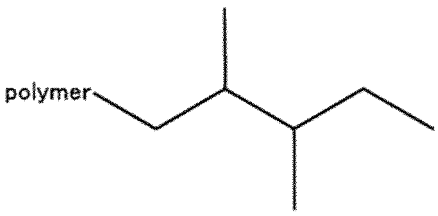

3,4-Dimethylpentyl Structural Formula (1-j)

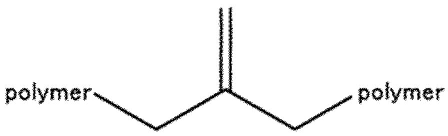

Internal vinylidene Structural Formula (1-k)

[Method for evaluating the terminal vinyl rate (Rv) and the terminal vinylidene rate (Rvd)]

The propylene polymerization conditions when the Rv and Rvd of the catalyst component are determined, will be described below.

First, the inside of a 20 L autoclave tank is purged with propylene; 18.7 mL of solution (140 mg/mL) of triisobutylaluminum in heptane is fed into the tank; 0.51 NL of hydrogen is introduced into the tank; 5000 g of liquid propylene is introduced into the tank; 300 mg of the catalyst containing the component [A-1], which is a mass excluding the preliminarily polymerized polymer, is fed under pressure into the tank; and then polymerization is initiated at 70°C for one hour. Finally, unreacted propylene is quickly purged to stop the polymerization. Accordingly, a propylene polymer is obtained.

The Rv is an index of the ratio of the number of the terminal vinyl groups to the total number of the polymer chains. The Rvd is an index of the ratio of the number of the terminal vinylidene groups to the total number of the polymer chains. First, each of the number of the unsaturated terminals and that of the saturated terminals is obtained from $^{1}$H-NMR and $^{13}$C-NMR as a number per 1000 monomers, and the total terminal number is determined as the total number of the saturated and unsaturated terminals. In the same manner, the LCB number is obtained from $^{13}$C-NMR as a number per 1000 monomers. The LCB number is subtracted from the total terminal number, and one-half (1/2) of the thus-obtained number is determined as the total polymer number. The number [Vi] of the terminal vinyl groups, which are unsaturated terminals, is divided by the total polymer number, thereby calculating the Rv. The number [Vd] of the terminal vinylidene groups, which are unsaturated terminals, is divided by the total polymer number, thereby calculating the Rvd. Further details of the calculation method are as follows.

<Method for calculating the numbers of the saturated terminals>

The numbers of the following main saturated terminals are obtained by the following formulae. In each formula, the integrated intensity of the $^{13}C$ signal is used as the number of the saturated terminals per 1000 monomers.

$[\text{i-butyl}] = I_{\text{i-butyl}} \times 1000 / I_{\text{total-C}}$ Structural Formula (1-c):

$[\text{n-butyl}] = I_{\text{nbu}} \times 1000 / I_{\text{total- --> c}}$ Structural Formula (1-e):

$[\text{n-propyl}] = I_{\text{npr}} \times 1000 / I_{\text{total- C}}$ Structural Formula (1-h):

$[\text{2,3-dimethylbutyl}] = I_{\text{2,3-dime}} \times 1000 / I_{\text{total-C}}$ Structural Formula (1-i):

$[\text{3,4-dimethylpentyl}] = I_{\text{3,4-dime}} \times 1000 / I_{\text{total-C}}$ Structural Formula (1-j):

When another type of saturated terminals are detected in addition to the above-mentioned main saturated terminals, in the same manner as above, the number of the saturated terminals of another type is calculated as the number per 1000 monomers, using the values mentioned in known literatures.

The $I_{\text{i-butyl}}$, $I_{\text{nbu}}$, $I_{\text{npr}}$, $I_{\text{2,3-dime}}$ and $I_{\text{3,4-dime}}$ denote the characteristic values of the signals based on the structural formulae (1-c), (1-e), (1-h), (1-i) and (1-j), respectively. They are amounts represented by the following formulae.

$$I_{\text{i-butyl}} = I_{23.80-23.65}$$

$$I_{\text{nbu}} = I_{36.99-36.88}$$

$$I_{\text{npr}} = I_{39.71-39.61}$$

$$I_{\text{2,3-dime}} = (I_{16.30-16.20} + I_{43.05-43.00}) / 2$$

$$I_{\text{3,4-dime}} = I_{12.0-11.60}$$

The $I_{\text{total-C}}$ value is an amount represented by the following formula.

$$I_{\text{total-C}} = I_{\text{i-butyl}} + I_{\text{nbu}} + I_{\text{npr}} + I_{\text{2,3-dime}} + I_{\text{3,4-dime}} + I_{\text{1,2-P}} + I_{\text{2,1-P}} + I_{\text{1,3-P}}$$

When there are other types of saturated structures in addition to the above-mentioned main saturated structures, the number of all detected structures is added to the above formula.

The $I_{\text{1,2-P}}$ is the characteristic value of the signal based on the 1,2-inserted propylene bond; the $I_{\text{2,1-P}}$ is the characteristic value of the signal based on the 2,1-inserted propylene bond; and the $I_{\text{1,3-P}}$ is the characteristic value of the signal based on the 1,3-inserted propylene bond. They are amounts represented by the following formulae.

$$I_{\text{1,2-P}} = I_{48.80-44.50}$$

$$I_{\text{2,1-P}} = (I_{34.68-34.63} + I_{35.47-35.40} + I_{35.94-35.70}) / 2$$

$$I_{\text{1,3-P}} = I_{37.50-37.20} / 2$$

<Method for calculating the numbers of the unsaturated terminals>

The numbers of the unsaturated terminals are obtained by the following formulae. In each formula, the integrated intensity of the $^{1}H$ signal is used as the number per 1000 monomers.

In $^1$H-NMR, the proton signals of the unsaturated bonds of the 1-propenyl structure represented by the structural formula (1-a) and the 1-butenyl structure represented by the structural formula (1-f) are detected in the state that they are overlaid on the signals of 5.08 ppm to 4.85 ppm and 5.86 ppm to 5.69 ppm in the $^1$H-NMR spectrum. Accordingly, the number of the terminal vinyl group, that is, [Vi] is determined as the total number of the 1-propenyl structure and the 1-butenyl structure.

Structural formula (1-a) + Structural formula (1-f):

$$[Vi] = I_{vi} \times 1000 / I_{total}$$

In the same manner as above, the number of the terminal vinylidene groups [Vd], the number of the i-butenyl group [i-butenyl], the number of the vinylene terminal [terminal vinylene] and the number of the internal vinylidene [internal vinylidene] are obtained by the following formulae.

Structural formula (1-b):

$$[Vd] = I_{vd} \times 1000 / I_{total}$$

Structural formula (1-d):

$$[i\text{-Butenyl}] = I_{ibu} \times 1000 / I_{total}$$

Structural formula (1-g):

$$[\text{Terminal vinylene}] = I_{vnl} \times 1000 / I_{total}$$

Structural formula (1-k):

$$[\text{Internal vinylidene}] = I_{ivd} \times 1000 / I_{total}$$

The $I_{vi}$ $I_{vd}$, $I_{ibu}$, $I_{vnl}$ and $I_{ivd}$ are characteristic values of the signals based on the structural formula (1-a) + the structural formula (1-f), the structural formula (1-b), the structural formula (1-d), the structural formula (1-g) and the structural formula (1-k), respectively. They are amounts represented by the following formulae.

$$I_{vi} = (I_{5.08-4.85} + I_{5.86-5.69}) / 3$$

$$I_{vd} = (I_{4.78-4.65}) / 2$$

$$I_{ibu} = I_{5.26-5.08}$$

$$I_{vnl} = (I_{5.58-5.26}) / 2$$

$$I_{ivd} = (I_{4.85-4.78}) / 2$$

The $I_{total}$ is an amount represented by the following formula.

$$I_{total} = I_{main} / 6 + I_{vi} + I_{vd} + I_{ibu} + I_{vnl} + I_{ivd}$$

When there are other types of unsaturated structures in addition to the above-mentioned main unsaturated structures, the number of all detected terminals is added to the above formula.

The $I_{main}$ is the sum of the integrated intensities of the proton signals which are detected from 4.00 ppm to 0.00 ppm in the $^1$H-NMR spectrum and which are bound to the saturated carbons of the polymer chains including the terminals.

<Method for calculating the LCB number>

The LCB number is obtained as a number per 1000 monomers by the method described in "Property (6)".

<Method for calculating the total terminal number>

The total terminal number is the total number of terminals per 1000 monomers calculated by $^1$H-NMR and $^{13}$C-NMR.

<Method for calculating the terminal vinyl rate (Rv) and the terminal vinylidene rate (Rvd)>

The Rv and Rvd are calculated by the following formulae, using the [Vi], [Vd], total terminal number and LCB number obtained above.

$$Rv = [Vi] / \{(\text{Total terminal number} - \text{LCB number}) / 2\}$$

$$Rvd = [Vd] / \{(\text{Total terminal number} - \text{LCB number}) / 2\}$$

As the component [A-1], examples include, but are not limited to, a bisindenyl complex having a bulky heterocyclic group at the 2-position of the indenyl group and an optionally substituted aryl group or heterocyclic group containing a nitrogen, oxygen or sulfur atom at the 4-position. As the preferred embodiments of the component [A-1], examples include, but are not limited to, the following structure.

[Chem. 3]

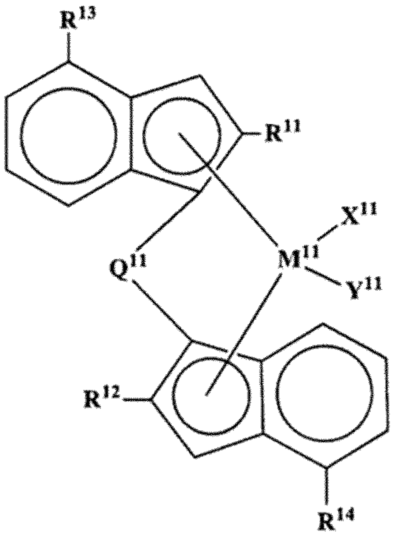

General Formula (a1)

(where $R^{11}$ and $R^{12}$ each independently represents a heterocyclic group containing 4 to 16 carbon atoms and containing a nitrogen, oxygen or sulfur atom; $R^{13}$ and $R^{14}$ each independently represents an aryl group containing 6 to 30 carbon atom and optionally containing one or more heteroatoms selected from halogen, silicon, oxygen, sulfur, nitrogen, boron and phosphorus, or a heterocyclic group containing 6 to 16 carbon atoms and containing a nitrogen, oxygen or sulfur atom; $Q^{11}$ represents a divalent hydrocarbon group containing 1 to 20 carbon atoms or a silylene or germylene group optionally containing a hydrocarbon group containing 1 to 20 carbon atoms; $M^{11}$ represents zirconium or hafnium; $X^{11}$ and $Y^{11}$ each independently represents a hydrogen atom, a halogen atom, a hydrocarbon group containing 1 to 20 carbon atoms, a silyl group containing a hydrocarbon group containing 1 to 20 carbon atoms, a halogenated hydrocarbon group containing 1 to 20 carbon atoms, an amino group or an alkylamino group containing 1 to 20 carbon atoms.)

The heterocyclic group containing 4 to 16 carbon atoms and containing a nitrogen, oxygen or sulfur atom as $R^{11}$ and $R^{12}$, is preferably a 2-furyl group, a substituted 2-furyl group, a substituted 2-thienyl group or a substituted 2-furfuryl group, and more preferably a substituted 2-furyl group.

When each of $R^{11}$ and $R^{12}$ is a group selected from heterocyclic groups each containing 4 to 16 carbon atoms and

each containing a nitrogen, oxygen or sulfur atom, the terminal vinyl rate (Rv) can be increased. Especially, by introducing a substituent of appropriate size onto the heterocyclic group, the relative positional relationship between the heterocycle, a coordination site on the transition metal, and a growing polymer chain can be made appropriate, and the Rv can be further increased, accordingly.

The substituent of the substituted 2-furyl group, 2-thienyl group and 2-furfuryl group is preferably a hydrocarbon group containing 1 to 4 carbon atoms.

Each of $R^{11}$ and $R^{12}$ is particularly preferably a 5-methyl-2-furyl group. Also, $R^{11}$ and $R^{12}$ are preferably the same groups.

$R^{13}$ and $R^{14}$ each independently represents an aryl group containing 6 to 30 carbon atoms and optionally containing one or more heteroatoms selected from halogen, silicon, oxygen, sulfur, nitrogen, boron and phosphorus, or a heterocyclic group containing 6 to 16 carbon atoms and containing a nitrogen, oxygen or sulfur atom.

Especially, by making $R^{13}$ and $R^{14}$ bulkier, a propylene polymer having higher stereoregularity, less heterologous bonds and a high terminal vinyl rate is obtained.

Accordingly, each of $R^{13}$ and $R^{14}$ is preferably an aryl group optionally containing, as a substituent on the aryl cyclic skeleton, one or more of a hydrocarbon group containing 1 to 6 carbon atoms, a silyl group containing a hydrocarbon group containing 1 to 6 carbon atoms, a halogenated hydrocarbon group containing 1 to 6 carbon atoms, and a halogen atom so that the number of the carbon atoms ranges from 6 to 16. As such $R^{13}$ and $R^{14}$, examples include, but are not limited to, a 4-t-butylphenyl group, a 2,3-dimethylphenyl group, a 3,5-di-t-butylphenyl group, a 4-chlorophenyl group, a 4-trimethylsilylphenyl group, a 1-naphthyl group and a 2-naphthyl group.

Each of $R^{13}$ and $R^{14}$ is more preferably a phenyl group containing, as a substituent, one or more of a hydrocarbon group containing 1 to 6 carbon atoms, a silyl group containing a hydrocarbon group containing 1 to 6 carbon atoms, a halogenated hydrocarbon group containing 1 to 6 carbon atoms, and a halogen atom so that the number of the carbon atoms ranges from 6 to 16. The substitution site is preferably the 4-position on the phenyl group. As such $R^{13}$ and $R^{14}$, examples include, but are not limited to, a 4-t-butylphenyl group, a 4-biphenylyl group, a 4-chlorophenyl group and a 4-trimethylsilylphenyl group. Also, $R^{13}$ and $R^{14}$ are preferably the same groups.

Each of $X^{11}$ and $Y^{11}$ is an ancillary ligand and reacts with the component [B] to produce active metallocene having olefin polymerizing ability. Accordingly, the ligand type of $X^{11}$ and $y^{11}$ is not particularly limited, as long as this object is achieved. $X^{11}$ and $Y^{11}$ each independently represents a hydrogen atom, a halogen atom, a hydrocarbon group containing 1 to 20 carbon atoms, a silyl group containing a hydrocarbon group containing 1 to 20 carbon atoms, a halogenated hydrocarbon group containing 1 to 20 carbon atoms, an oxygen atom-containing hydrocarbon group containing 1 to 20 carbon atoms, an amino group or an alkylamino group containing 1 to 20 carbon atoms.

$Q^{11}$ represents a divalent hydrocarbon group containing 1 to 20 carbon atoms or a silylene or germylene group optionally containing a hydrocarbon group containing 1 to 20 carbon atoms, which bonds the two five-membered rings. When there are two hydrocarbon groups on the silylene or germylene group, they may be bound to form a cyclic structure.

As $Q^{11}$, examples include, but are not limited to, the following: an alkylene group such as methylene, methylmethylene, dimethylmethylene and 1,2-ethylene; an arylalkylene group such as diphenylmethylene; a silylene group; an alkylsilylene group such as methylsilylene, dimethylsilylene, diethylsilylene, di(n-propyl)silylene, di(i-propyl) silylene and di(cyclohexyl)silylene; an (alkyl) (aryl)silylene group such as methyl(phenyl)silylene; an arylsilylene group such as diphenylsilylene; an alkyloligosilylene group such as tetramethyldisilylene; a germylene group; and an alkylgermylene group, an (alkyl) (aryl)germylene group and an arylgermylene group, each of which is obtained by substituting germanium for silicon in the above silylene group containing a divalent hydrocarbon group containing 1 to 20 carbon atoms. Of them, a silylene group containing a hydrocarbon group containing 1 to 20 carbon atoms or a germylene group containing a hydrocarbon group containing 1 to 20 carbon atoms is preferred, and an alkylsilylene group or an alkylgermylene group is particularly preferred.

Of the compounds represented by the general formula (a1), preferred compounds are as follows, for example.

(1) dichloro[1,1'-dimethylsilylene bis{2-(2-furyl)-4-phenylindenyl}]hafnium,
(2) dichloro[1,1'-dimethylsilylene bis{2-(2-thienyl)-4-phenylindenyl}]hafnium,
(3) dichloro[1,1'-dimethylsilylene bis{2-(5-methyl-2-furyl)-4-phenylindenyl}]hafnium,
(4) dichloro[1,1'-diphenylsilylene bis{2-(5-methyl-2-furyl)-4-phenylindenyl}]hafnium,
(5) dichloro[1,1'-dimethylgermylene bis{2-(5-methyl-2-furyl)-4-phenylindenyl}]hafnium,
(6) dichloro[1,1'-dimethylgermylene bis{2-(5-methyl-2-thienyl)-4-phenylindenyl}]hafnium,
(7) dichloro[1,1'-dimethylsilylene bis{2-(5-t-butyl-2-furyl)-4-phenylindenyl}]hafnium,
(8) dichloro[1,1'-dimethylsilylene bis{2-(5-trimethylsilyl-2-furyl)-4-phenylindenyl}]hafnium,
(9) dichloro[1,1'-dimethylsilylene bis{2-(5-phenyl-2-furyl)-4-phenylindenyl}]hafnium,
(10) dichloro[1,1'-dimethylsilylene bis{2-(4,5-dimethyl-2-furyl)-4-phenylindenyl}]hafnium,
(11) dichloro[1,1'-dimethylsilylene bis{2-(2-benzofuryl)-4-phenylindenyl}]hafnium,
(12) dichloro[1,1'-dimethylsilylene bis{2-(2-furfuryl)-4-phenylindenyl}]hafnium,

(13) dichloro[1,1'-dimethylsilylene bis{2-(5-methyl-2-furyl)-4-(4-chlorophenyl)indenyl}]hafnium,
(14) dichloro[1,1'-dimethylsilylene bis{2-(5-t-butyl-2-furyl)-4-(4-chlorophenyl)indenyl}]hafnium,
(15) dichloro[1,1'-dimethylsilylene bis{2-(5-methyl-2-furyl)-4-(4-fluorophenyl)indenyl}]hafnium,
(16) dichloro[1,1'-dimethylsilylene bis{2-(5-methyl-2-furyl)-4-(4-trifluoromethylphenyl)indenyl}]hafnium,
(17) dichloro[1,1'-dimethylsilylene bis{2-(5-methyl-2-furyl)-4-(4-i-propylphenyl)indenyl}]hafnium,
(18) dichloro[1,1'-dimethylsilylene bis{2-(5-methyl-2-furyl)-4-(4-t-butylphenyl)indenyl}]hafnium,
(19) dichloro[1,1'-dimethylsilylene bis{2-(5-t-butyl-2-furyl)-4-(4-i-propylphenyl)indenyl}]hafnium,
(20) dichloro[1,1'-dimethylsilylene bis{2-(5-t-butyl-2-furyl)-4-(4-t-butylphenyl)indenyl}]hafnium,
(21) dichloro[1,1'-dimethylsilylene bis{2-(5-methyl-2-furyl)-4-(4-trimethylsilylphenyl)indenyl}]hafnium,
(22) dichloro[1,1'-dimethylsilylene bis{2-(2-furyl)-4-(1-naphthyl)indenyl}]hafnium,
(23) dichloro[1,1'-dimethylsilylene bis(2-(2-furyl)-4-(2-naphthyl)indenyl)]hafnium,
(24) dichloro[1,1'-dimethylsilylene bis(2-(2-furyl)-4-(2-phenanthryl)indenyl)]hafnium,
(25) dichloro[1,1'-dimethylsilylene bis(2-(2-furyl)-4-(9-phenanthryl)indenyl)]hafnium,
(26) dichloro[1,1'-dimethylsilylene bis{2-(5-methyl-2-furyl)-4-(4-biphenylyl)indenyl}]hafnium,
(27) dichloro[1,1'-dimethylsilylene bis{2-(5-methyl-2-furyl)-4-(1-naphthyl) indenyl}]hafnium,
(28) dichloro[1,1'-dimethylsilylene bis{2-(5-methyl-2-furyl)-4-(2-naphthyl) indenyl}]hafnium,
(29) dichloro[1,1'-dimethylsilylene bis{2-(5-t-butyl-2-furyl)-4-(1-naphthyl)indenyl}]hafnium, and
(30) dichloro[1,1'-dimethylsilylene bis{2-(5-t-butyl-2-furyl)-4-(2-naphthyl) indenyl}]hafnium.

Of them, more preferred are the following compounds:

(3) dichloro[1,1'-dimethylsilylene bis{2-(5-methyl-2-furyl)-4-phenylindenyl}]hafnium,
(7) dichloro[1,1'-dimethylsilylene bis{2-(5-t-butyl-2-furyl)-4-phenylindenyl}]hafnium,
(13) dichloro[1,1'-dimethylsilylene bis{2-(5-methyl-2-furyl)-4-(4-chlorophenyl)indenyl}]hafnium,
(14) dichloro[1,1'-dimethylsilylene bis{2-(5-t-butyl-2-furyl)-4-(4-chlorophenyl)indenyl}]hafnium, furyl)-4-(4-t-butylphenyl)indenyl}]hafnium,
(17) dichloro[1,1'-dimethylsilylene bis{2-(5-methyl-2-furyl)-4-(4-i-propylphenyl)indenyl}]hafnium,
(18) dichloro[1,1'-dimethylsilylene bis{2-(5-methyl-2-furyl)-4-(4-t-butylphenyl)indenyl}]hafnium,
(19) dichloro[1,1'-dimethylsilylene bis{2-(5-t-butyl-2-furyl)-4-(4-i-propylphenyl)indenyl}]hafnium,
(20) dichloro[1,1'-dimethylsilylene bis{2-(5-t-butyl-2-
(21) dichloro[1,1'-dimethylsilylene bis{2-(5-methyl-2-furyl)-4-(4-trimethylsilylphenyl)indenyl}]hafnium,
(26) dichloro[1,1'-dimethylsilylene bis{2-(5-methyl-2-furyl)-4-(4-biphenylyl)indenyl}]hafnium,
(28) dichloro[1,1'-dimethylsilylene bis{2-(5-methyl-2-furyl)-4-(2-naphthyl)indenyl}]hafnium, and
(30) dichloro[1,1'-dimethylsilylene bis{2-(5-t-butyl-2- furyl)-4-(2-naphthyl)indenyl}]hafnium.

Of them, still more preferred are the following compounds:

(13) dichloro[1,1'-dimethylsilylene bis{2-(5-methyl-2-furyl)-4-(4-chlorophenyl)indenyl}]hafnium,
(17) dichloro[1,1'-dimethylsilylene bis{2-(5-methyl-2-furyl)-4-(4-i-propylphenyl)indenyl}]hafnium,
(18) dichloro[1,1'-dimethylsilylene bis{2-(5-methyl-2-furyl)-4-(4-t-butylphenyl)indenyl}]hafnium, and
(21) dichloro[1,1'-dimethylsilylene bis{2-(5-methyl-2-furyl)-4-(4-trimethylsilylphenyl)indenyl}]hafnium.

II-1-2. Component [A-2]

The component [A-2] is a metallocene compound which gives, when propylene is homopolymerized at 70°C, a propylene homopolymer a-2 having a larger Mn than the propylene homopolymer a-1 and having an Rv of 0.1 or more and less than 0.5.

The component [A-2] is a metallocene compound which forms a polymerization catalyst for copolymerizing a propylene monomer and a propylene macromonomer and for producing a propylene macromonomer.

Accordingly, the component [A-2] is a metallocene compound which gives an Rv of 0.1 or more, preferably 0.15 or more, and more preferably 0.2 or more.

By using, as the component [A-2], the metallocene compound which forms a polymerization catalyst that can, while having a high molecular weight and a low Rv, efficiently copolymerize macromonomers, the production of a high-molecular-weight branched component having a long branch is suppressed.

Accordingly, the component [A-2] is a metallocene compound which gives an Rv of less than 0.5, preferably 0.45 or less, and more preferably 0.3 or less.

To obtain the average molecular weight, molecular weight distribution and branch distribution which can cause the Mw, Mz and g' ($100\times10^4$), which are characteristics of the branched propylene-based polymer of the present invention,

to have the above properties and preferably which can cause the W200×$10^4$/W100×$10^4$ to satisfy the above properties, the component [A-2] needs to produce a higher-molecular-weight polymer than the component [A-1].

Accordingly, the component [A-2] is a metallocene compound which produces a polymer having a higher molecular weight than the polymer produced by the component [A-1], when propylene is homopolymerized at 70°C using the same amount of hydrogen.

To obtain the average molecular weight, molecular weight distribution and branch distribution which can cause the branched propylene-based polymer of the present invention to satisfy the above properties, the component [A-2] preferably has better macromonomer copolymerizability than the component [A-1].

Accordingly, the component [A-2] is preferably such a metallocene compound, that when propylene homopolymerization is carried out at 70°C, the ratio of the number of copolymerized terminal vinyl forming LCB out of the number of the produced terminal vinyl {LCB number / ([Vi] + LCB number)} is larger than the component [A-1].

By selecting the component [A-2] as described above, the following reaction can be preferentially caused: a macromonomer having a relatively small molecular weight, which is produced by the component [A-1], is copolymerized by the component [A-2].

The method for evaluating the Rv and the Rvd is carried out in the same manner as the method for evaluating the component [A-1], except that 100 mg (the mass excluding the preliminarily polymerized polymer) of the catalyst containing the component [A-2] is polymerized by introducing 1.19 NL of hydrogen.

As with the method for evaluating the Rv and the Rvd, the characteristics of the Mw can be evaluated by producing polymers from the components [A-2] and [A-1] by bulk polymerization at 70°C, measuring the polymers by GPC to obtain their Mw's, and comparing them.

Also, as with the method for evaluating the Rv and the Rvd, the characteristics of the macromonomer copolymerizability can be evaluated by producing polymers from the components [A-2] and [A-1] by bulk polymerization at 70°C, measuring the polymers by NMR to obtain the ratio of the number of copolymerized terminal vinyl forming LCB out of the number of the produced terminal vinyl {LCB number / ([Vi] + LCB number)}, and comparing them.

As described above, since the ratio of the macromonomer in the polymer produced from the component [A-2] is lower than the ratio of the macromonomer in the polymer produced from the component [A-1], the copolymerization amount of the macromonomer 2 is suppressed. Meanwhile, since the copolymerizability of the component [A-2] is better than that of the component [A-1], the branched chain length in the branched structure having the branched propylene-based polymer introduced therein, can be adjusted by efficient copolymerization of the macromonomer 1. Using the branched chain length adjustment, such a branched propylene-based polymer can be obtained, that has the average molecular weight, molecular weight distribution, branch distribution, branched structure and derived melting properties (Ea, SHI and MBI) which can cause the Mw, Mz and g'(100×$10^4$) which are characteristics of the branched propylene-based polymer of the present invention, to have the above properties and preferably which can cause the W200×$10^4$/W100×$10^4$ to satisfy the above properties.

As the component [A-2], examples include, but are not limited to, a metallocene compound represented by the following general formula (a2):

[Chem. 4]

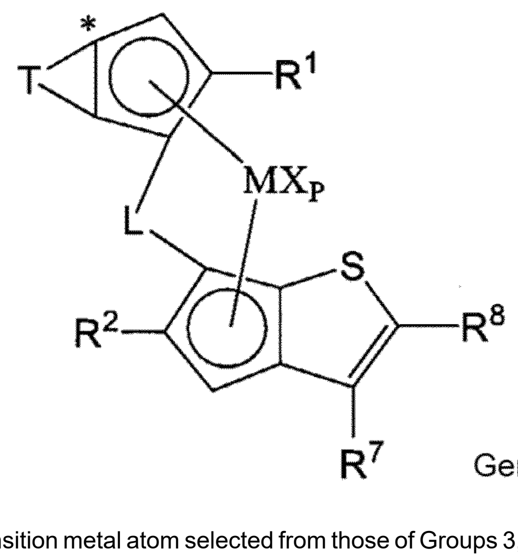

General Formula (a2)

(where M is a transition metal atom selected from those of Groups 3, 4, 5 and 6 of the periodic cable, lanthanides and actinides; M is preferably titanium, zirconium or hafnium;

p is 0, 1, 2 or 3, and p is preferably 2 and is equivalent to the formal oxidation state of the metal M minus 2;
X's are the same or different and each X is a hydrogen atom, a halogen atom, or an $R^a$, $OR^a$, $OSO_2CF_3$, $OCOR^a$, $SR^a$, $NR^a{}_2$ or $PR^a{}_2$ group (where $R^a$ is a linear or branched, cyclic or acyclic alkyl group containing 1 to 40 carbon atoms, an alkenyl group containing 2 to 40 carbon atoms, an alkynyl group containing 2 to 40 carbon atoms, an aryl group containing 6 to 40 carbon atoms, an alkylaryl group containing 7 to 40 carbon atoms, or an arylalkyl group containing 7 to 40 carbon atoms, all of which optionally contain a heteroatom of the Groups 13 to 17 of the periodic table); $R^a$ is preferably a linear or branched alkyl group containing 1 to 20 carbon atoms; or two X's may form a substituted or unsubstituted butadienyl group or an OR'O group (where R' is a divalent group selected from an alkylidene group containing 1 to 40 carbon atoms, an arylidene group containing 6 to 40 carbon atoms, an alkylarylidene group containing 7 to 40 carbon atoms, and an arylalkylidene group containing 7 to 40 carbon atoms); X is preferably a hydrogen atom, a halogen atom or an $R^a$ group; X is more preferably a chlorine atom or an alkyl group containing 1 to 10 carbon atoms, such as a methyl group and an ethyl group;

L is a divalent hydrocarbon group containing 1 to 40 carbon atoms and optionally containing a heteroatom of the Groups 13 to 17 of the periodic table, or a divalent silylene group containing up to 5 silicon atoms; L is preferably a divalent bridging group selected from an alkylidene group containing 1 to 40 carbon atoms, a cycloalkylidene group containing 3 to 40 carbon atoms, an arylidene group containing 6 to 40 carbon atoms, an alkylarylidene group containing 7 to 40 carbon atoms, an arylalkylidene group containing 7 to 40 carbon atoms, all of which optionally contain a heteroatom of the Groups 13 to 17 of the periodic table, and a silylene group containing up to 5 silicon atoms, such as $SiMe_2$ and $SiPh_2$; L is preferably a $(Z(R'')_2)_n$ group (where Z is a carbon or silicon atom; n is 1 or 2; R" is a hydrocarbon group containing 1 to 20 carbon atoms and optionally containing a heteroatom of the Groups 13 to 17 of the periodic table; and R" is preferably a linear or branched, cyclic or acyclic alkyl group containing 1 to 20 carbon atoms, an alkenyl group containing 2 to 20 carbon atoms, an alkynyl group containing 2 to 20 carbon atoms, an aryl group containing 6 to 20 carbon atoms, an alkylaryl group containing 7 to 20 carbon atoms, or an arylalkyl group containing 7 to 20 carbon atoms, all of which optionally contain a heteroatom of the Groups 13 to 17 of the periodic table); the $(Z(R'')_2)_n$ group is more preferably $Si(CH_3)_2$, $SiPh_2$, SiPhMe, SiMe($SiMe_3$), $CH_2$ and $(CH_2)_2$ or $C(CH_3)_2$;
each of $R^1$ and $R^2$ is a hydrocarbon group containing 1 to 40 carbon groups and optionally containing a heteroatom of the Groups 13 to 17 of the periodic table, and $R^1$ and $R^2$ are the same or different; each of $R^1$ and $R^2$ is preferably a linear or branched, cyclic or acyclic alkyl group containing 1 to 40 carbon atoms, an alkenyl group containing 2 to 40 carbon atoms, an alkynyl group containing 2 to 40 carbon atoms, an aryl group containing 6 to 40 carbon atoms, an alkylaryl group containing 7 to 40 carbon atoms, or an arylalkyl group containing 7 to 40 carbon atoms, all of which optionally contain a heteroatom of the Groups 13 to 17 of the periodic table; each of $R^1$ and $R^2$ is more preferably a linear or branched alkyl group containing 1 to 20 carbon atoms; each of $R^1$ and $R^2$ is still more preferably a methyl or ethyl group;
T is the following formula (a2-T1) or (a2-T2) and T's are the same or different:

[Chem. 5]

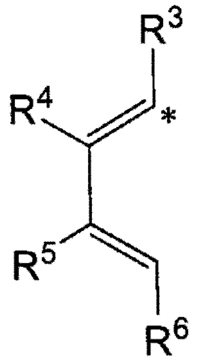

(a2-T1)

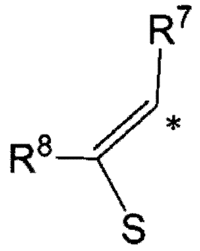

(a2-T2)

(where the atom with the symbol "*" binds to the atom with the same symbol in the compound of the formula (a2); $R^3$ is a hydrogen atom or a hydrocarbon group containing 1 to 40 carbon atoms and optionally containing a heteroatom of the Groups 13 to 17 of the periodic table; $R^3$ is preferably a linear or branched, cyclic or acyclic alkyl group containing 1 to 40 carbon atoms, an alkenyl group containing 2 to 40 carbon atoms, an alkynyl group

containing 2 to 40 carbon atoms, an aryl group containing 6 to 40 carbon atoms, an alkylaryl group containing 7 to 40 carbon atoms, or an arylalkyl group containing 7 to 40 carbon atoms, all of which optionally contain a heteroatom of the Groups 13 to 17 of the periodic table; $R^3$ is more preferably a linear or branched alkyl group containing 1 to 20 carbon atoms, an aryl group containing 6 to 40 carbon atoms, an alkylaryl group containing 7 to 40 carbon atoms, or an arylalkyl group containing 7 to 40 carbon atoms; $R^3$ is still more preferably an aryl group containing 6 to 20 carbon atoms, which is optionally substituted with one or more alkyl groups each containing 1 to 10 carbon atoms;

each of $R^4$ and $R^6$ is a hydrogen atom or a hydrocarbon group containing 1 to 40 carbon atoms and optionally containing a heteroatom of the Groups 13 to 17 of the periodic table, and $R^4$ and $R^6$ are the same or different; each of $R^4$ and $R^6$ is a hydrogen atom, a linear or branched, cyclic or acyclic alkyl group containing 1 to 40 carbon atoms, an alkenyl group containing 2 to 40 carbon atoms, an alkynyl group containing 2 to 40 carbon atoms, an aryl group containing 6 to 40 carbon atoms, an alkylaryl group containing 7 to 40 carbon atoms, or an arylalkyl group containing 7 to 40 carbon atoms, all of which optionally contain a heteroatom of the Groups 13 to 17 of the periodic table, and $R^4$ and $R^6$ are the same or different; each of $R^4$ and $R^6$ is preferably a hydrogen atom;

$R^5$ is a hydrogen atom or a hydrocarbon group containing 1 to 40 carbon atoms and optionally containing a heteroatom of the Groups 13 to 17 of the periodic table; $R^5$ is preferably a linear or branched, cyclic or acyclic alkyl group containing 1 to 40 carbon atoms, an alkenyl group containing 2 to 40 carbon atoms, an alkynyl group containing 2 to 40 carbon atoms, an aryl group containing 6 to 40 carbon atoms, an alkylaryl group containing 7 to 40 carbon atoms, or an arylalkyl group containing 7 to 40 carbon atoms, all of which optionally contain a heteroatom of the Groups 13 to 17 of the periodic table; $R^5$ is more preferably a linear or branched, saturated or unsaturated alkyl group containing 1 to 20 carbon atoms; $R^5$ is still more preferably a methyl or ethyl group;

each of $R^7$ and $R^8$ is a hydrogen atom or a hydrocarbon group containing 1 to 40 carbon atoms and optionally containing a heteroatom of the Groups 13 to 17 of the periodic table, and $R^7$ are the same or different $R^8$; $R^7$ and $R^8$ optionally form a saturated or unsaturated, 5- or 6-membered ring, and the ring optionally includes, as a substituent, an alkyl group containing 1 to 20 carbon atoms; each of $R^7$ and $R^8$ is preferably a hydrogen atom or a linear or branched, cyclic or acyclic alkyl group containing 1 to 40 carbon atoms, an alkenyl group containing 2 to 40 carbon atoms, an alkynyl group containing 2 to 40 carbon atoms, an aryl group containing 6 to 40 carbon atoms, an alkylaryl group containing 7 to 40 carbon atoms, or an arylalkyl group containing 7 to 40 carbon atoms, all of which optionally contain a heteroatom of the Groups 13 to 17 of the periodic table;

$R^8$ is preferably a hydrogen atom or a linear or branched, saturated or unsaturated alkyl group containing 1 to 20 carbon atoms; $R^8$ is more preferably a methyl or ethyl group; $R^7$ is preferably an alkyl group containing 1 to 40 carbon atoms, an aryl group containing 6 to 40 carbon atoms, an alkylaryl group containing 7 to 40 carbon atoms, or an arylalkyl group containing 7 to 40 carbon atoms; $R^7$ is more preferably the following formula (a2-R7):

[Chem. 6]

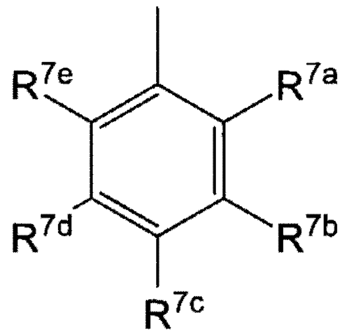

(a 2 − R 7)

(wherein each of $R^{7a}$, $R^{7b}$, $R^{7c}$, $R^{7d}$ and $R^{7e}$ is a hydrogen atom or a linear or branched, cyclic or acyclic alkyl group containing 1 to 20 carbon atoms, an alkenyl group containing 2 to 20 carbon atoms, an alkynyl group containing 2 to 20 carbon atoms, an aryl group containing 6 to 20 carbon atoms, an alkylaryl group containing 7 to 20 carbon atoms, or an arylalkyl group containing 7 to 20 carbon atoms, all of which optionally contain a heteroatom of the Groups 13 to 17 of the periodic table, and $R^{7a}$, $R^{7b}$, $R^{7c}$, $R^{7d}$ and $R^{7e}$ may be the same or different; each of $R^{7a}$ and $R^{7d}$ is preferably a hydrogen atom; and each of $R^{7b}$, $R^{7c}$ and $R^{7e}$ is preferably a hydrogen atom or a linear or branched, cyclic or acyclic alkyl group containing 1 to 10 carbon atoms.)]

In an embodiment, the compound represented by the general formula (a2) may be a compound represented by the following general formula (a3):

[Chem. 7]

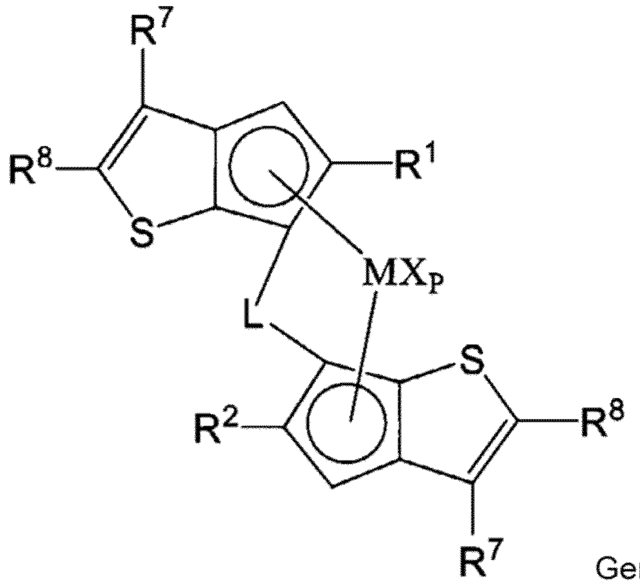

General Formula (a3)

(where M, X, p, L, $R^1$, $R^2$, $R^7$ and $R^8$ has the same meaning as those of the formula (a2).)

In the formula (a3), M is preferably hafnium, from the point of view that a certain proportion of vinyl groups can be formed at the terminals, and long chain branches can be produced by copolymerizing the macromonomer.

As the metallocene complex represented by the general formula [a3], examples include, but are not limited to, the following.

Dimethylsilylene bis(cyclopenta[b]thienyl)hafnium dichloride Dimethylsilylene bis(5-methyl-cyclopenta[b]thienyl) hafnium dichloride
Dimethylsilylene bis(2,5-dimethyl-cyclopenta[b]thienyl)hafnium dichloride
Dimethylsilylene bis(2,3,5-trimethylcyclopenta[b]thienyl)hafnium dichloride
Dimethylsilylene bis(2,5-dimethyl-3-phenylcyclopenta[b]thienyl)hafnium dichloride
Dimethylsilylene bis(2,5-dimethyl-3-(4-t-butylphenyl)-cyclopenta[b]thienyl)hafnium dichloride
Dimethylsilylene bis(2,5-dimethyl-3-(2,5-dimethylphenyl)-cyclopenta[b]thienyl)hafnium dichloride
Dimethylsilylene bis(2,5-dimethyl-3-(3,5-dimethylphenyl)-cyclopenta[b]thienyl)hafnium dichloride
Dimethylsilylene bis(2,5-dimethyl-3-(3,5-di-t-butylphenyl)-cyclopenta[b]thienyl)hafnium dichloride

In addition, examples include, but are not limited to, the above-exemplified compound in which one or both of the two X's are replaced with bromine atoms, iodine atoms, methyl groups, phenyl groups, dimethylamino groups, diethylamino groups or the like, instead of chlorine atoms. When an asymmetric carbon is formed in the metallocene complexes, unless otherwise noted, it means one of stereoisomers or a mixture thereof (including a racemate).

As the method for synthesizing the metallocene complex represented by the general formula [a2], a conventionally-known synthesis method can be appropriately selected and used. For example, the metallocene complex represented by the general formula [a2] can be synthesized with reference to Japanese Translation of PCT International Application Publication No. 2007-528925.

As the method for synthesizing the metallocene complex represented by the general formula [a3], a conventionally-known synthesis method can be appropriately selected and used. For example, the metallocene complex represented by the general formula [a3] can be synthesized with reference to JP-A No. 2021-152155.

II-1-3. Component [B]

The component [B] is a compound or layered silicate which is reactive with the components [A-1] and [A-2] to form an ion pair.

The component [B] may be used alone, or two or more kinds of the components [B] may be used. The component [B] is preferably the layered silicate.

II-1-3-1. Compound which is reactive with the components [A-1] and [A-2] to form an ion pair

As the compound which is reactive with the components [A-1] and [A-2] to form an ion pair, examples include, but are not limited to, an aluminum oxy compound and a boron compound. As the aluminum oxy compound, examples include, but are not limited to, compounds represented by the following general formulae (I) to (III).

[Chem. 8]

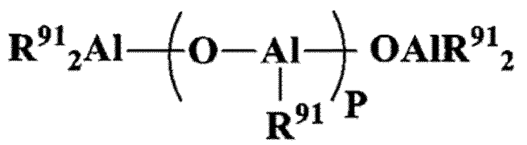

General Formula (I)

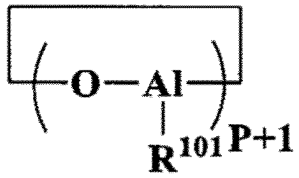

General Formula (II)

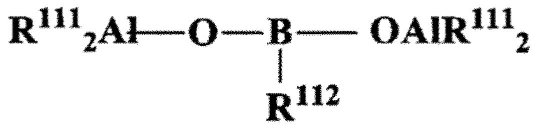

General Formula (III)

In the general formula (I), (II), and (III), $R^{91}$, $R^{101}$ and $R^{111}$ each independently represents a hydrogen atom or a hydrocarbon group, preferably a hydrocarbon group containing 1 to 10 carbon atoms, and particularly preferably a hydrocarbon group containing 1 to 6 carbon atoms. A number of $R^{91}$'s may be the same or different; a number of $R^{101}$'s may be the same or different; and a number of $R^{111}$'s may be the same or different. Also, p is an integer of from 0 to 40, and preferably an integer of from 2 to 30.

Each of the compounds represented by the general formulae (I) and (II) is a compound called aluminoxane. Among aluminoxanes, methylaluminoxane or methyl isobutyl aluminoxane is preferred. Several kinds of aluminoxanes may be used in each group or between the groups.

In the general formula (III), $R^{112}$ is a hydrocarbon group containing 1 to 10 (preferably 1 to 6) carbon atoms.

As the boron compound, examples include, but are not limited to, a complex of a cation (such as carbonium cation and ammonium cation) and an organoboron compound (such as triphenylboron, tris(3,5-difluorophenyl)boron and tris(pentafluorophenyl)boron), and various kinds of organoboron compounds such as tris(pentafluorophenyl)boron.

II-1-3-2. Layered silicate

The layered silicate (hereinafter, it may be simply referred to as "silicate") is a silicate compound having a crystal structure such that sheet-shaped crystals are stacked in parallel by ionic bonding or the like. In the silicate compound, the sheet-shaped crystals form single layers, and interlayer ions are present between the layers.

As the layered silicate, examples include, but are not limited to, layered silicates described in "Nendo Kobutsu Gaku (Clay mineralogy)" written by Haruo Shirozu (published by Asakura Shoten in 1988), such as a layered silicate having a 1:1 layer structure, which consists of a unit made up of one tetrahedral sheet and one octahedral sheet, and a layered silicate having a 2:1 layer structure, which consists of a unit made up of two tetrahedral sheets and one octahedral sheet sandwiched therebetween.

As the layered silicate having the 1:1 layer structure, examples include, but are not limited to, kaolin group silicates (such as dickite, nacrite, kaolinite, metahalloysite and halloysite) and serpentine group silicates (such as chrysotile, lizardite and antigorite).

As the layered silicate having the 2:1 layer structure, examples include, but are not limited to, smectite group silicates (such as montmorillonite, beidellite, nontronite, saponite, hectorite and stevensite), vermiculite group silicates (such as vermiculite), mica group silicates (such as mica, illite, sericite and glauconite), attapulgite, sepiolite, palygorskite,

bentonite, pyrophyllite, talc and a chlorite group. They may form a mixed layer.

Among them, preferred is a layered silicate which has, as the main component, a 2:1 layer structure consisting of a unit made up of two tetrahedral sheets and one octahedral sheet sandwiched therebetween, the tetrahedral sheets mainly consisting of silicon oxide and the octahedral sheet mainly consisting of aluminum oxide. The main component is preferably a smectite group silicate, and more preferably montmorillonite.

The layered silicate can contain exchangeable ions (interlayer ions) between the layers. Such a layered silicate that can exchange interlayer ions, is an ion-exchange layered silicate.

The interlayer ion is preferably an interlayer cation such that the ion is a cation. The type of the interlayer cation is not particularly limited. As the main component, examples include, but are not limited to, an alkali metal of the Group 1 in the periodic table, such as lithium and sodium, an alkaliearth metal of the Group 2 in the periodic table, such as calcium and magnesium, and a transition metal such as iron, cobalt, copper, nickel, zinc, ruthenium, rhodium, palladium, silver, iridium, platinum and gold.

The layered silicate may be a natural layered silicate or an artificially synthesized layered silicate.

The form of the layered silicate is not particularly limited. The layered silicate may be in a naturally mined form, or it may be in an artificially synthesized spherical form.

The form of the naturally mined layered silicate can be processed by an operation such as pulverization and granulation. The form of the naturally mined layered silicate is preferably made into a spherical form by granulation. The particle size distribution of the layered silicate processed into a spherical form, is particularly preferably narrowed by an operation such as classification, since good polymer particle properties are obtained.

To change the interlayer ions of the layered silicate into alkali metal ions, it is preferable that the layered silicate is chemically treated.

The layered silicate can be chemically treated by the method described in paragraphs 0048 to 0066 in JP-A No. 2018-162391, for example.

The component [B] preferably used in the present invention is a chemically treated layered silicate. From the viewpoint of the amounts and distribution of the supported catalyst components [A-1] and [A-2], the molar ratio between the aluminum atoms and silicon atoms contained in the layered silicate (Al/Si) preferably ranges from 0.01 to 0.25, more preferably from 0.03 to 0.24, and still more preferably from 0.05 to 0.23.

In reference to the description of paragraph 0089 in JP-A No. 2018-162391, the Al and Si in the layered silicate are measured by the method for creating a calibration curve by the chemical analysis method defined in JIS and quantifying the aluminum and silicon by X-ray fluorescence.

II-1-4. Component [C]

The component [C] used in the present invention is an organoaluminum compound, and it is preferably an organoaluminum compound represented by the following general formula (IV):

$$(AlR^b{}_nX_{3-n})_m \qquad \text{General Formula (IV)}$$

(where $R^b$ is an alkyl group containing 1 to 20 carbon atoms; X is halogen, hydrogen, an alkoxy group or an amino group; n is an integer of from 1 to 3; and m is an integer of from 1 to 2.)

As the component [C], an organoaluminum compound can be used solely, or several kinds of organoaluminum compounds can be used in combination of two or more.

As the organoaluminum compound, examples include, but are not limited to, trimethylaluminum, triethylaluminum, tri-n-propylaluminum, tri-n-butylaluminum, triisobutylaluminum, tri-n-hexylaluminum, tri-n-octylaluminum, tri-n-decylaluminum, diethylaluminum chloride, diethylaluminum sesquichloride, diethylaluminum hydride, diethylaluminum ethoxide, diethylaluminum dimethylamide, diisobutylaluminum hydride, and diisobutylaluminum chloride. Of them, preferred is a trialkylaluminum (represented by the general formula (IV) where m is 1 and n is 3) and a dialkylaluminum hydride (represented by the general formula (IV) where m is 2; n is 1; and X is hydrogen) . More preferred is a trialkylaluminum (represented by the general formula (IV) where R is an alkyl group containing 1 to 8 carbon atoms).

II-1-5. Catalyst preparation

The olefin polymerization catalyst preferably used in the present invention contains the above-described components [A-1], [A-2], [B] and [C]. The olefin polymerization catalyst can be obtained by contacting them inside or outside a polymerization tank. The olefin polymerization catalyst may be preliminarily polymerized in the presence of an olefin.

The amounts of the components [A-1], [A-2], [B] and [C] used can be any amounts.

For example, the total amount of the components [A-1] and [A-2] used may be in a range of from 0.1 μmol to 1000

μmol, or may be in a range of from 0.5 μmol to 500 μmol, with respect to 1 g of the component [B].

As for the ratio between the components [A-1] and [A-2], the ratio of the molar amount of the component [A-1] to the total molar amount of the components [A-1] and [A-2] is preferably 0.30 or more and 0.99 or less. By changing the molar amount ratio, the average molecular weight, the high molecular weight, the very high molecular weight, the branch number and the branch distribution are changed. By this change, the branched propylene-based polymer of the present invention in which, while maintaining the necessary branched structure, there are less components having an extraordinarily long relaxation time, is obtained.

The amount of the component [C] used may be, in terms of the molar ratio of the aluminum of the component [C] to the total transition metals of the components [A-1] and [A-2], in a range of from 0.01 to $5\times10^6$, or it may be in a range of from 0.1 to $1\times10^4$.

The components [A-1], [A-2], [B] and [C] can be brought into contact in any order. As the order, examples include the following.

(1) One of the components [A-1] and [A-2] is brought into contact with the component [B]; they are brought into contact with the component [C]; and then they are brought into contact with the remaining component [A-1] or [A-2].
(2) The components [A-1] and [A-2] are separately or concurrently brought into contact with the component [B], and then they are brought into contact with the component [C].
(3) The components [C] and [B] are brought into contact with each other, and then the components [A-1] and [A-2] are successively or concurrently brought into contact with them.
(4) The components [A-1] and [A-2] are concurrently brought into contact with the component [C], in the presence of the component [B].

Of them, (4) is preferred.

In the above examples, a solvent may be used for sufficient contact between the components. As the solvent, examples include, but are not limited to, aliphatic saturated hydrocarbon, aromatic hydrocarbon, aliphatic unsaturated hydrocarbon, halides thereof, and a monomer for preliminarily polymerization. As the aliphatic saturated hydrocarbon and the aromatic hydrocarbon, examples include, but are not limited to, hexane, heptane and toluene. As the monomer for preliminarily polymerization used as the solvent, examples include, but are not limited to, propylene.

II-1-6. Preliminary polymerization

The olefin polymerization catalyst may be a catalyst subjected to preliminary polymerization in which, by bringing the catalyst into contact with an olefin, a small amount of the olefin is polymerized. The catalyst subjected to the preliminary polymerization has improved catalytic activity and can produce the propylene-based polymer at low cost.

The olefin used is not particularly limited. As the olefin, examples include, but are not limited to, ethylene, propylene, 1-butene, 1-hexene, 1-octene, 4-methyl-1-pentene, 3-methyl-1-butene, vinylcycloalkane and styrene. Of them, propylene is preferred.

As the olefin used, an olefin derived from fossil fuel, an olefin derived from biomass, an olefin derived from chemical recycling, or a mixture thereof may be used.

The olefin can be fed into a preliminary polymerization tank by any method. As the method, examples include, but are not limited to, a method for introducing the olefin at a fixed rate, a method for introducing the olefin while keeping the olefin at a fixed pressure, combinations thereof, and a method for changing the feeding method of the olefin in a stepwise manner.

The preliminary polymerization temperature and the preliminary polymerization time are not particularly limited, and they are preferably in a range of from -20°C to 100°C and a range of from 5 minutes to 24 hours, respectively.

As the preliminary polymerization ratio, the mass ratio of the preliminarily polymerized polymer to the component [B] may be from 0.01 to 100, or it may be from 0.1 to 50.

During the preliminary polymerization, the component [C] can be added.

During or after the preliminary polymerization, a polymer such as polyethylene and polypropylene or a solid inorganic oxide such as silica and titania is allowed to coexist.

II-2. Method for polymerizing the propylene-based polymer

As the method for polymerizing the branched propylene-based polymer of the present invention, examples include, but are not limited to, a method for homopolymerizing propylene or copolymerizing propylene with a comonomer in the presence of the propylene polymerization catalyst comprising the components [A-1], [A-2], [B] and [C].

As the polymerization styles, any method such as a solution polymerization method, a gas phase polymerization method, a bulk polymerization method in which propylene is used as a solvent instead of substantially using an inert

solvent, can be employed. Of them, the bulk polymerization method is preferred.

For example, the polymerization temperature of the bulk polymerization may be from 40°C to 80°C, or it may be from 50°C to 75°C. The polymerization pressure of the bulk polymerization may be from 1.0 MPa to 5.0 MPa, may be from 1.5 MPa to 4.0 MPa, or may be from 2.0 MPa to 3.5 MPa.

As the polymerization method, a continuous polymerization method or a batch polymerization method can be employed. As the number of polymerization stages, a single-stage polymerization or a multi-stage polymerization of two or more stages can be employed.

The polymerization may be homopolymerization of propylene, or it may be copolymerization of propylene and an $\alpha$-olefin comonomer containing 2 to 20 carbon atoms other than propylene. As the $\alpha$-olefin comonomer, examples include, but are not limited to, one or more kinds of comonomers selected from ethylene, 1-butene, 1-hexene, 1-octene, 4-methyl-1-pentene and so on. By the homopolymerization of propylene, a propylene homopolymer is obtained. By the copolymerization of propylene and a comonomer, a propylene copolymer is obtained.

As the propylene and the comonomer, propylene and a comonomer derived from fossil fuel, biomass or chemical recycling, or propylene and a comonomer derived from a mixture thereof can be used, respectively.

[Use of hydrogen]

The branched propylene-based polymer of the present invention can be obtained by using hydrogen in the presence of the catalyst and controlling the amount of the hydrogen used.

The average molecular weight and molecular weight distribution (Mz, Mw, Mn, Mw/Mn and Mz/Mw) of the branched propylene-based polymer measured by GPC, and the balances thereof can be adjusted as follows, for example, by controlling the used hydrogen amount, etc.

In the method for producing the branched propylene-based polymer of the present invention, it is preferable that in the relationship between the components [A-1] and [A-2], the component [A-1] relatively functions as a catalyst component that produces a low-molecular-weight component, and the component [A-2] relatively functions as a catalyst component that produces a high-molecular-weight component. As a result, the Mz change rate relative to the change in the hydrogen amount, becomes larger than the Mw change rate, and the Mz/Mw can be changed without a large change in the Mw/Mn, accordingly.

For example, when the hydrogen amount is increased, the rate of change of the decrease in the molecular weight of a polymer produced from the component [A-2] that gives a high molecular weight, is large relative to a polymer produced from the component [A-1] that gives a low molecular weight. When the component [A-1] is relatively more activated than the component [A-2], the molecular weight distribution changes so that the percentage of the polymer produced from the component [A-1] is larger than the polymer produced from the component [A-2]. Due to this change in the molecular weight distribution, the Mz and the Mz/Mw can be made smaller without a large change in the Mw and the Mw/Mn.

On the other hand, when the hydrogen amount is decreased, the rate of change of the increase in the molecular weight of the polymer produced from the component [A-2] that gives a high molecular weight, is large relative to the polymer produced from the component [A-1] that gives a low molecular weight. Due to this change in the molecular weight distribution, the Mz and the Mz/Mw can be made larger without a large change in the Mw and the Mw/Mn.

[Method for using the catalyst]

In the case of continuously polymerizing the branched propylene-based polymer of the present invention, it is preferable to continuously introduce the catalyst when at least hydrogen and propylene are continuously introduced into the polymerization reactor.

[Polymer slurry concentration]

For example, in the case of producing the branched propylene-based polymer of the present invention by bulk continuous polymerization, the amount of the polymer contained in the polymerization reactor can be kept constant (a steady state) by controlling the amount of the propylene introduced into the polymerization reactor and the recovered amounts of the produced polymer and the unreacted propylene.

At this time, the ratio of the polymer amount to the propylene mass in the polymerization reactor (i.e., a polymer slurry concentration) is constant.

However, even when the polymer slurry concentration is constant, when the polymer is slightly precipitated, the polymer concentration varies depending on the height of the position in the propylene solution. In this case, the hydrogen consumption rate varies depending on the position, resulting in broadening of the molecular weight and branch distribution.

Accordingly, in the method for producing the branched propylene-based polymer of the present invention, the

polymer slurry concentration is preferably 55 mass % or less, more preferably 50 mass % or less, and still more preferably 45 mass % or less.

From the viewpoint of productivity, it is preferable to control the polymer slurry concentration. In the method for producing the branched propylene-based polymer of the present invention, the polymer slurry concentration is preferably 30 mass % or more, more preferably 35 mass % or more, and still more preferably 40 mass % or more.

III. Applications of the branched propylene-based polymer

The branched propylene-based polymer of the present invention can be used as a molding material after it is made into the form of a powder, the form of pellets cut into granules after heat melt-kneading, or the like.

The branched propylene-based polymer of the present invention can be mixed with an additive and a resin. As the additive, examples include, but are not limited to, an antioxidant, an UV absorber, an antistatic agent, a nucleating agent, a lubricant, a flame retardant, an anti-blocking agent, a colorant, an inorganic filler and an organic filler. As the resin, examples include, but are not limited to, various kinds of synthetic and natural resins.

The branched propylene-based polymer of the present invention can be molded by any of various kinds of polypropylene molding methods. As the molding methods, examples include, but are not limited to, injection molding, extrusion molding, foam molding and blow molding. As the molded product that can be produced by the method, examples include, but are not limited to, produce various kinds of molded products such as an injection-molded industrial component, a container, an unstretched film, a uniaxially stretched film, a biaxially stretched film, a sheet, a pipe and fibers.

In the branched propylene-based polymer of the present invention, while it retains the necessary melt tension, there are less components having an extraordinarily long relaxation time. Accordingly, the branched propylene-based polymer that is excellent in ductility when melting is provided, and it can be suitably used in applications in which ductility is needed.

Also, the branched propylene-based polymer of the present invention can be blended with other resins when used.

Examples

Hereinafter, the present invention will be described in more detail, with reference to examples and comparative examples. The present invention is not limited to these examples, unless it is beyond the gist thereof.

In the following examples, before using an autoclave, the autoclave was sufficiently dried by introducing nitrogen, while heating the autoclave. Also, catalyst preparation and polymerization were all carried out in an inert gas.

(1) Synthesis of catalyst component (A)

(1-1) Synthesis Example 1: Synthesis of catalyst component [A-1]

(Complex 1)

Synthesis of rac-dichloro[1,1'-dimethylsilylene bis{2-(5-methyl-2-furyl)-4-(4-isopropylphenyl)indenyl}]hafnium:

In accordance with the method of Synthesis Example 1 in JP-A No. 2012-149160, rac-dichloro[1,1'-dimethylsilylene bis{2-(5-methyl-2-furyl)-4-(4-isopropylphenyl)indenyl}]hafnium was synthesized.

(1-2) Synthesis Example 2: Synthesis of catalyst component [A-2]

(Complex 2)

1) Synthesis of rac-dimethylsilylene bis(2,5-dimethyl-3-phenylcyclopenta[b]thienyl)hafnium dichloride (complex 2):

(1-a) Synthesis of 2,5-dimethyl-3-phenylhydrocyclopenta[b]thiophene:

Synthesis was carried out by reference to the method described in Example 1 in Japanese translation of PCT International Application No. 2003-517010.

(1-b) Synthesis of dimethyl bis(2,5-dimethyl-3-phenyl-hydrocyclopenta[b]thiophene) silane:

First, 2,5-dimethyl-3-phenyl-hydrocyclopenta[b]thiophene (8.8 g, 39 mmol) and THF (200 ml) were put in a 500

ml reaction container made of glass, and the mixture was cooled to -70°C. Next, an n-butyllithium-n-hexane solution (1.55 mol/L, 25 ml, 39 mmol) was added thereto in a dropwise manner. After the dropwise addition, the mixture was stirred for two hours, while gradually returning the mixture temperature to room temperature. The mixture was cooled to -70°C again; 1-methylimidazole (0.15 ml, 1.9 mmol) was added thereto; and a THF solution containing dimethyldichlorosilane (2.5 g, 19 mmol) was added thereto in a dropwise manner. After the dropwise addition, the mixture was stirred overnight, while gradually returning the mixture temperature to room temperature.

Distilled water was added to a reaction solution thus obtained. The mixture thus obtained was transferred to a separatory funnel and washed with brine to be neutral. Sodium sulfate was added thereto, and the reaction solution was left overnight to be dried. The sodium sulfate was subjected to filtration; the solvent was distilled under reduced pressure; a solid thus obtained was purified by a silica-gel column, thereby obtaining a white powder (9.8 g, yield 99%) of dimethyl bis(2,5-dimethyl-3-phenyl-hydrocyclopenta[b]thiophene)silane.

(1-c) Synthesis of rac-dimethylsilylene bis(2,5-dimethyl-3-phenyl-cyclopenta[b]thienyl)hafnium dichloride (complex A):

First, dimethyl bis(2,5-dimethyl-3-phenyl-hydrocyclopenta[b]thiophene)silane (6.1 g, 12 mmol) and diethyl ether (200 ml) were put in a 500 ml reaction container made of glass. In a dry ice-methanol bath, the mixture was cooled to - 70°C. An n-butyllithium-n-hexane solution (1.55 mol/L, 16 ml, 24 mmol) was added thereto in a dropwise manner. After the dropwise addition, the mixture was returned to room temperature and then stirred for two hours. The solvent of the obtained reaction solution was concentrated to about 20 ml under reduced pressure; toluene (250 ml) and THF (10 ml) were added thereto; the mixture was cooled to -70°C in a dry ice-methanol bath; and then, hafnium tetrachloride (3.8 g, 12 mmol) was added thereto. Next, the mixture was stirred overnight, while gradually returning the mixture temperature to room temperature.

The solvent was distilled from the mixture under reduced pressure, and the solid thus obtained was recrystallized with toluene/hexane, thereby obtaining a racemic dimethylsilylene bis(2,5-dimethyl-3-phenyl-cyclopenta[b]thienyl)hafnium dichloride (purity 97%) in the form of yellow crystals (0.87 g, yield 10%).

The identified values of the obtained racemate, which were obtained by the proton nuclear magnetic resonance method ($^1$H-NMR), are as shown below.

$^1$H-NMR($CDCl_3$) identification results

Racemate: δ1.06 (s, 6H), δ2.42 (s, 6H), δ2.59 (s, 6H), δ8.51 (s, 2H), δ7.28-δ7.33 (m, 2H), δ7.39-δ7.43 (m, 4H), δ7.46-δ7.50 (m, 4H)

(1-3) Synthesis Example 3: Synthesis of comparative catalyst component [CA-2]

(Complex 3)

Synthesis of rac-dichloro[1,1'-dimethylsilylene bis{2-methyl-4-(4-chlorophenyl)-4-hydroazulenyl}]hafnium:

In accordance with the method of Example 7 in JP-A No. H11-240909, rac-dichloro[1,1'-dimethylsilylene bis{2-methyl-4-(4-chlorophenyl)-4-hydroazulenyl}]hafnium was synthesized.

(2) Synthesis example of component (B): Chemical treatment of ion-exchange layered silicate

First, 645.1 g of distilled water and 82.6 g of 98% sulfuric acid were fed into a 1 L three-necked flask, which was equipped with stirring blades and a reflux device, and the temperature of the mixture was increased to 95°C.

Next, 100 g of a commercially-available montmorillonite (BENCLAY KK manufactured by Mizusawa Industrial Chemicals, Ltd., Al: 9.78% by mass, Si: 31.79% by mass, Mg: 3.18% by mass, Al/Si (molar ratio): 0.320, average particle diameter: 14 μm) was added thereto, and the mixture was reacted at 95°C for 320 minutes. After the elapse of 320 minutes, 0.5 L of distilled water was added to stop the reaction. Then, the mixture was subjected to filtration, thereby obtaining 255 g of a solid in cake form.

In 1 g of this cake, 0.31 g of chemically-treated montmorillonite (an intermediate) was contained. The chemical composition of the chemically-treated montmorillonite (the intermediate) was as follows.
Al: 7.68% by mass, Si: 36.05% by mass, Mg: 2.13% by mass, Al/Si (molar ratio): 0.222

The cake was mixed with 1545 g of distilled water and slurried. The temperature of the obtained slurry was increased to 40°C. To the slurry, 5.734 g of a lithium hydroxide-hydrate was added in solid form. Then, the slurry was reacted at 40°C for one hour. After the elapse of one hour, the reacted slurry was subjected to filtration and then washed three times with 1 L of distilled water, thereby obtaining a solid in cake form again.

The obtained solid in the cake form was preliminarily dried overnight under normal pressure at 90°C and then dried under reduced pressure for two or more hours after bumping calmed down using an oil bath at 200°C, thereby obtaining 80 g of a chemically-treated montmorillonite. The chemical composition of the chemically-treated montmorillonite was as follows.

Al: 7.68% by mass, Si: 36.05% by mass, Mg: 2.13% by mass, Al/Si (molar ratio): 0.222, Li: 0.53% by mass

(3) Preparation of catalyst

(3-1) Synthesis example of catalyst 1

First, 10 g of the chemically-treated montmorillonite obtained above was fed into a three-necked flask (volume 1 L). The chemically-treated montmorillonite was mixed with heptane (66 mL) and slurried. Next, triisobutylaluminum (25 mmol: 34.0 mL of a heptane solution with a concentration of 143 mg/mL) was added to the slurry, and they were stirred for one hour. Then, the slurry was washed with heptane to reach a residual liquid rate of 1/100, thereby adjusting the total volume of the slurry to 50 mL.

In another flask (volume 200 mL), the rac-dichloro[1,1'-dimethylsilylene bis{2-(5-methyl-2-furyl)-4-(4-isopropylphenyl)indenyl}]hafnium (complex 1) (105 μmol) produced in the synthesis example of the catalyst component [A-1] was dissolved in toluene (21 mL) to prepare a solution (solution 1). In addition, in another flask (volume 200 mL), the rac-dimethylsilylene bis(2,5-dimethyl-3-phenyl-cyclopenta[b]thienyl)hafnium dichloride (complex 2) (45 μmol) produced in the synthesis example of the catalyst component [A-2] was dissolved in toluene (9 mL) to prepare a solution (solution 2).

Triisobutylaluminum (0.42 mmol: 0.6 mL of a heptane solution with a concentration of 143 mg/mL) was added to the 1 L flask containing the chemically-treated montmorillonite. Then, the solution 1 (21 mL) was added thereto, and they were stirred at room temperature for 20 minutes.

Next, triisobutylaluminum (0.18 mmol: 0.25 mL of a heptane solution with a concentration of 143 mg/mL) was further added thereto. Then, the solution 2 was added thereto, and they were stirred for one hour at room temperature.

Then, 170 mL of heptane was added to the mixture. A slurry thus obtained was introduced into a 1 L autoclave.

After the internal temperature of the autoclave was controlled to 40°C, preliminary polymerization was carried out, while feeding propylene at a rate of 5 g/hour and keeping the internal temperature at 40°C for 4 hours. Then, the propylene feeding was stopped, and residual polymerization reaction was carried out for one hour. After the supernatant of a catalyst slurry thus obtained was removed therefrom by decantation, to the residue thus left, triisobutylaluminum (6 mmol: 8.5 mL of a heptane solution with a concentration of 143 mg/mL) was added, and they were stirred for 5 minutes.

The catalyst slurry was dried under reduced pressure for one hour, thereby obtaining 28.2 g of a preliminary polymerization catalyst (catalyst 1). The preliminary polymerization ratio of the catalyst (a value obtained by dividing the preliminarily polymerized polymer amount by the solid catalyst amount) was 1.82.

(3-2) Synthesis example of catalyst 2

First, 10 g of the chemically-treated montmorillonite obtained above was fed into a three-necked flask (volume 1 L). The chemically-treated montmorillonite was mixed with heptane (66 mL) and slurried. Next, triisobutylaluminum (25 mmol: 34.0 mL of a heptane solution with a concentration of 143 mg/mL) was added to the slurry, and they were stirred for one hour. Then, the slurry was washed with heptane to reach a residual liquid rate of 1/100, thereby adjusting the total volume of the slurry to 50 mL.

In another flask (volume 200 mL), the rac-dichloro[1,1'-dimethylsilylene bis{2-(5-methyl-2-furyl)-4-(4-isopropylphenyl)indenyl}]hafnium (complex 1) (105 μmol) produced in the synthesis example of the catalyst component [A-1] was dissolved in toluene (21 mL) to prepare a solution (solution 1). In addition, in another flask (volume 200 mL), the racdichloro [1,1'-dimethylsilylene bis{2-methyl-4-(4-chlorophenyl)-4-hydroazulenyl}]hafnium (complex 3) (45 μmol) produced in the synthesis example of the comparative catalyst component [CA-2] was dissolved in toluene (9 mL) to prepare a solution (solution 2).

Triisobutylaluminum (0.42 mmol: 0.6 mL of a heptane solution with a concentration of 143 mg/mL) was added to the 1 L flask containing the chemically-treated montmorillonite. Then, the solution 1 (21 mL) was added thereto, and they were stirred at room temperature for 20 minutes.

Next, triisobutylaluminum (0.18 mmol: 0.25 mL of a heptane solution with a concentration of 143 mg/mL) was further added thereto. Then, the solution 2 was added thereto, and they were stirred for one hour at room temperature.

Then, 170 mL of heptane was added to the mixture. A slurry thus obtained was introduced into a 1 L autoclave.

After the internal temperature of the autoclave was controlled to 40°C, preliminary polymerization was carried out, while feeding propylene at a rate of 5 g/hour and keeping the internal temperature at 40°C for 4 hours. Then, the propylene feeding was stopped, and residual polymerization reaction was carried out for one hour. After the supernatant of a catalyst slurry thus obtained was removed therefrom by decantation, to the residue thus left, triisobutylaluminum (6

mmol: 8.5 mL of a heptane solution with a concentration of 143 mg/mL) was added, and they were stirred for 5 minutes.

The catalyst slurry was dried under reduced pressure for one hour, thereby obtaining 30.9 g of a preliminary polymerization catalyst (catalyst 2). The preliminary polymerization ratio of the catalyst was 2.09.

(3-3) Synthesis example of catalyst 3

First, 10 g of the chemically-treated montmorillonite obtained above was fed into a three-necked flask (volume 1 L). The chemically-treated montmorillonite was mixed with heptane (66 mL) and slurried. Next, triisobutylaluminum (25 mmol: 34.0 mL of a heptane solution with a concentration of 143 mg/mL) was added to the slurry, and they were stirred for one hour. Then, the slurry was washed with heptane to reach a residual liquid rate of 1/100, thereby adjusting the total volume of the slurry to 50 mL.

In another flask (volume 200 mL), the rac-dichloro[1,1'-dimethylsilylene bis{2-(5-methyl-2-furyl)-4-(4-isopropylphenyl)indenyl}]hafnium (complex 1) (75 μmol) produced in the synthesis example of the catalyst component [A-1] was dissolved in toluene (15 mL) to prepare a solution (solution 1). In addition, in another flask (volume 200 mL), the rac-dimethylsilylene bis(2,5-dimethyl-3-phenyl-cyclopenta[b]thienyl)hafnium dichloride (complex 2) (75 μmol) produced in the synthesis example of the catalyst component [A-2] was dissolved in toluene (15 mL) to prepare a solution (solution 2).

Triisobutylaluminum (0.42 mmol: 0.6 mL of a heptane solution with a concentration of 143 mg/mL) was added to the 1 L flask containing the chemically-treated montmorillonite. Then, the solution 1 (21 mL) was added thereto, and they were stirred at room temperature for 20 minutes.

Next, triisobutylaluminum (0.18 mmol: 0.25 mL of a heptane solution with a concentration of 143 mg/mL) was further added thereto. Then, the solution 2 was added thereto, and they were stirred for one hour at room temperature.

Then, 170 mL of heptane was added to the mixture. A slurry thus obtained was introduced into a 1 L autoclave.

After the internal temperature of the autoclave was controlled to 40°C, preliminary polymerization was carried out, while feeding propylene at a rate of 5 g/hour and keeping the internal temperature at 40°C for 4 hours. Then, the propylene feeding was stopped, and residual polymerization reaction was carried out for one hour. After the supernatant of a catalyst slurry thus obtained was removed therefrom by decantation, to the residue thus left, triisobutylaluminum (6 mmol: 8.5 mL of a heptane solution with a concentration of 143 mg/mL) was added, and they were stirred for 5 minutes.

The catalyst slurry was dried under reduced pressure for one hour, thereby obtaining 28.5 g of a preliminary polymerization catalyst (catalyst 3). The preliminary polymerization ratio of the catalyst was 1.85.

(4) Examples

[Example 1]

(Polymerization)

A 20 L autoclave was used after the inside of the tank was purged with propylene and cooled to room temperature. Next, 18.7 mL of a solution (140 mg/mL) of triisobutylaluminum in heptane and 5000 g of liquid propylene were introduced into the polymerization tank. Next, the temperature of the inside of the tank was increased to 63°C. Then, 700 mg of the catalyst 1, which is a mass excluding the preliminarily polymerized polymer, was fed under pressure to the polymerization tank by high-pressure argon to initiate polymerization, and the temperature of the inside of the tank was quickly increased to 70°C. The temperature was kept at 70°C, and after the lapse of one hour from the polymerization initiation, unreacted propylene was quickly purged to stop the polymerization. Accordingly, about 1687 g of a propylene homopolymer was obtained. The obtained polymer was measured by GPC, 3D-GPC and $^{13}$C-NMR.

(Granulation)

With respect to 100 parts by mass of the branched propylene-based polymer thus obtained, 0.125 parts by mass of phenol-based antioxidant IRGANOX 1010 (tetrakis[methylene-3-(3',5'-di-t-butyl-4'-hydroxyphenyl)propionate] methane manufactured by BASF Japan Ltd.) and 0.125 parts by mass of phosphite-based antioxidant IRGAFOS 168 (tris(2,4-di-t-butylphenyl)phosphite manufactured by BASF Japan Ltd.) were used. They were mixed for three minutes at room temperature, by use of high-speed agitation mixer HENSCHEL MIXER (manufactured by Nippon Coke & Engineering Co., Ltd.) Then, the mixture was melt-kneaded by use of twin screw extruder KZW-25 (product name, manufactured by Technovel Corporation) in the following condition: the screw rotation frequency of the extruder was set to 400 rpm, and the kneading temperature under the hopper was set as follows in stages: 80°C, 120°C and 230°C (this temperature was maintained to the outlet of the die). The molten resin extruded from the strand die of the extruder was drawn, while cooling and solidifying the resin in a cooling water bath. The strand was cut and pelletized by a use of a strand cutter.

The MFR of the obtained pellets was 4.5 g/10 min. Using the obtained pellets, the Ea, MT, elongational viscosity, TREF and MaxDraw thereof were measured. The evaluation results of the properties are shown in Table 1.

[Example 2]

Polymerization was carried out in the same manner as Example 1, except that 500 mg (the mass excluding the preliminarily polymerized polymer) of the catalyst 1 and 0.09 NL of hydrogen were introduced. As a result, 1750 g of a polymer was obtained.

Granulation of the obtained polymer was carried out in the same manner as Example 1. As a result, the MFR of the obtained pellets was 9.0 g/10 min. The results of evaluating the properties in the same manner as Example 1 are shown in Table 1.

[Example 3]

Polymerization was carried out in the same manner as Example 1, except that 400 mg (the mass excluding the preliminarily polymerized polymer) of the catalyst 1 and 0.43 NL of hydrogen were introduced. As a result, 2109 g of a polymer was obtained.

Granulation of the obtained polymer was carried out in the same manner as Example 1. As a result, the MFR of the obtained pellets was 21 g/10 min. The results of evaluating the properties in the same manner as Example 1 are shown in Table 1.

[Example 4]

Polymerization was carried out in the same manner as Example 1, except that 100 mg (the mass excluding the preliminarily polymerized polymer) of the catalyst 1 and 1.87 NL of hydrogen were introduced, and the polymerization time was changed to three hours. As a result, 1960 g of a polymer was obtained.

Granulation of the obtained polymer was carried out in the same manner as Example 1. As a result, the MFR of the obtained pellets was 32 g/10 min. The results of evaluating the properties in the same manner as Example 1 are shown in Table 1.

[Example 5]

Polymerization was carried out in the same manner as Example 4, except that 160 mg (the mass excluding the preliminarily polymerized polymer) of the catalyst 3 was introduced in place of the catalyst 1, and 0.51 NL of hydrogen was introduced. As a result, 2026 g of a polymer was obtained.

Granulation of the obtained polymer was carried out in the same manner as Example 1. As a result, the MFR of the obtained pellets was 1.2 g/10 min. The results of evaluating the properties in the same manner as Example 1 are shown in Table 1.

[Example 6]

Polymerization was carried out in the same manner as Example 4, except that 90 mg (the mass excluding the preliminarily polymerized polymer) of the catalyst 3 was introduced in place of the catalyst 1, and 1.36 NL of hydrogen was introduced. As a result, 1852 g of a polymer was obtained.

Granulation of the obtained polymer was carried out in the same manner as Example 1. As a result, the MFR of the obtained pellets was 2.7 g/10 min. The results of evaluating the properties in the same manner as Example 1 are shown in Table 1.

[Comparative Example 1]

A 20 L autoclave was used after the inside of the tank was purged with propylene and cooled to room temperature. Next, 18.7 mL of a solution (140 mg/mL) of triisobutylaluminum in heptane and 0.68 NL of hydrogen were introduced into the polymerization tank, followed by 5000 g of liquid propylene. Next, the temperature of the inside of the tank was increased to 63°C. Then, 310 mg of the catalyst 2, which is a mass excluding the preliminarily polymerized polymer, was fed under pressure to the polymerization tank by high-pressure argon to initiate polymerization, and the temperature of the inside of the tank was quickly increased to 70°C. The temperature was kept at 70°C, and after the elapse of one hour from the polymerization initiation, unreacted propylene was quickly purged to stop the polymerization. Accordingly, 2288 g of a propylene homopolymer was obtained.

Granulation of the obtained polymer was carried out in the same manner as Example 1. As a result, the MFR of the obtained pellets was 3.3 g/10 min. The results of evaluating the properties in the same manner as Example 1 are shown in Table 1.

[Comparative Example 2]

Polymerization was carried out in the same manner as Comparative Example 1, except that 230 mg (the mass excluding the preliminarily polymerized polymer) of the catalyst 2 and 1.02 NL of hydrogen were introduced. As a result, 1978 g of a polymer was obtained.

Granulation of the obtained polymer was carried out in the same manner as Example 1. As a result, the MFR of the obtained pellets was 9.9 g/10 min. The results of evaluating the properties in the same manner as Example 1 are shown in Table 1.

[Comparative Example 3]

Polymerization was carried out in the same manner as Comparative Example 1, except that 220 mg (the mass excluding the preliminarily polymerized polymer) of the catalyst 2 and 1.11 NL of hydrogen were introduced. As a result, 1936 g of a polymer was obtained.

Granulation of the obtained polymer was carried out in the same manner as Example 1. As a result, the MFR of the obtained pellets was 15.0 g/10 min. The results of evaluating the properties in the same manner as Example 1 are shown in Table 1.

[Comparative Example 4]

Polymerization was carried out in the same manner as Comparative Example 1, except that 360 mg (the mass excluding the preliminarily polymerized polymer) of the catalyst 2 and 0.51 NL of hydrogen were introduced. As a result, 1872 g of a polymer was obtained.

Granulation of the obtained polymer was carried out in the same manner as Example 1. As a result, the MFR of the obtained pellets was 0.8 g/10 min. The results of evaluating the properties in the same manner as Example 1 are shown in Table 1.

[Comparative Example 5]

Polymerization was carried out in the same manner as Comparative Example 1, except that 200 mg (the mass excluding the preliminarily polymerized polymer) of the catalyst 2 and 0.94 NL of hydrogen were introduced. As a result, 2000 g of a polymer was obtained.

Granulation of the obtained polymer was carried out in the same manner as Example 1. As a result, the MFR of the obtained pellets was 40 g/10 min. The results of evaluating the properties in the same manner as Example 1 are shown in Table 1.

[Reference Example 1]: Evaluation of the performance of the complex 1 as the catalyst component (A)

(Preparation of catalyst R1)

First, 10 g of the chemically-treated montmorillonite obtained above was fed into a three-necked flask (volume 1 L). The chemically-treated montmorillonite was mixed with heptane (65 mL) and slurried. Next, triisobutylaluminum (25 mmol: 35 mL of a heptane solution with a concentration of 143 mg/mL) was added to the slurry, and they were stirred for one hour. Then, the slurry was washed with heptane to reach a residual liquid rate of 1/100, thereby adjusting the total volume of the slurry to 50 mL.

In another flask (volume 200 mL), the rac-dichloro[1,1'-dimethylsilylene bis{2-(5-methyl-2-furyl)-4-(4-isopropylphenyl)indenyl}hafnium (complex 1) (0.15 mmol) synthesized in the synthesis example 1 was dissolved in toluene (30 mL) to prepare a solution.

Triisobutylaluminum (0.60 mmol: 0.85 mL of a heptane solution with a concentration of 143 mg/mL) was added to the 1 L flask containing the chemically-treated montmorillonite. Then, the solution was added thereto, and they were stirred at room temperature for 60 minutes.

Then, 170 mL of heptane was added to the mixture. A slurry thus obtained was introduced into a 1 L autoclave.

After the internal temperature of the autoclave was controlled to 40°C, preliminary polymerization was carried out, while feeding propylene at a rate of 5 g/hour and keeping the internal temperature at 40°C for 4 hours. Then, the

propylene feeding was stopped, and residual polymerization reaction was carried out for one hour. After the supernatant of a catalyst slurry thus obtained was removed therefrom by decantation, to the residue thus left, triisobutylaluminum (6 mmol: 8.5 mL of a heptane solution with a concentration of 143 mg/mL) was added, and they were stirred for 5 minutes.

The catalyst slurry was dried under reduced pressure for 40 minutes, thereby obtaining 29.5 g of a preliminary polymerization catalyst (catalyst R1). The preliminary polymerization ratio of the catalyst was 1.95.

(Polymerization)

A 20 L autoclave was used after the inside of the tank was purged with propylene and cooled to room temperature. Next, 18.7 mL of a solution (140 mg/mL) of triisobutylaluminum in heptane and 0.51 NL of hydrogen were introduced into the polymerization tank, followed by 5000 g of liquid propylene. Next, the temperature of the inside of the tank was increased to 63°C. Then, 300 mg of the catalyst R1, which is a mass excluding the preliminarily polymerized polymer, was fed under pressure to the polymerization tank by high-pressure argon to initiate polymerization, and the temperature of the inside of the tank was quickly increased to 70°C. The temperature was kept at 70°C, and after the lapse of one hour from the polymerization initiation, unreacted propylene was quickly purged to stop the polymerization. Accordingly, 1740 g of a propylene homopolymer was obtained. The obtained polymer was measured by MFR, GPC and NMR. The results are shown in Table 2.

[Reference Example 2]: Evaluation of the performance of the complex 2 as the catalyst component (A)

(Preparation of catalyst R2)

First, 10 g of the chemically-treated montmorillonite obtained above was fed into a three-necked flask (volume 1 L). The chemically-treated montmorillonite was mixed with heptane (66 mL) and slurried. Next, triisobutylaluminum (25 mmol: 34.0 mL of a heptane solution with a concentration of 143 mg/mL) was added to the slurry, and they were stirred for one hour. Then, the slurry was washed with heptane to reach a residual liquid rate of 1/100, thereby adjusting the total volume of the slurry to 50 mL.

In another flask (volume 200 mL), the rac-dimethylsilylene bis(2,5-dimethyl-3-phenyl-cyclopenta[b]thienyl) hafnium dichloride (complex 2) (0.15 mmol) synthesized in the synthesis example 2 was dissolved in toluene (30 mL) to prepare a solution.

Triisobutylaluminum (0.60 mmol: 0.85 mL of a heptane solution with a concentration of 143 mg/mL) was added to the 1 L flask containing the chemically-treated montmorillonite. Then, the solution was added thereto, and they were stirred at room temperature for 60 minutes.

Then, 170 mL of heptane was added to the mixture. A slurry thus obtained was introduced into a 1 L autoclave.

After the internal temperature of the autoclave was controlled to 40°C, preliminary polymerization was carried out, while feeding propylene at a rate of 5 g/hour and keeping the internal temperature at 40°C for 4 hours. Then, the propylene feeding was stopped, and residual polymerization reaction was carried out for one hour. After the supernatant of a catalyst slurry thus obtained was removed therefrom by decantation, to the residue thus left, triisobutylaluminum (6 mmol: 8.5 mL of a heptane solution with a concentration of 143 mg/mL) was added, and they were stirred for 5 minutes.

The catalyst slurry was dried under reduced pressure for one hour, thereby obtaining 32.0 g of a preliminary polymerization catalyst (catalyst R2). The preliminary polymerization ratio of the catalyst was 2.20.

(Polymerization)

Polymerization was carried out in the same manner as Reference Example 1, except that 100 mg (the mass excluding the preliminarily polymerized polymer) of the catalyst R2 was introduced in place of the catalyst R1, and 1.19 NL of hydrogen was introduced. As a result, 1153 g of a polymer was obtained. The obtained polymer was measured by MFR, GPC and NMR. The results are shown in Table 2.

[Reference Example 3]: Evaluation of the performance of the complex 3 as the catalyst component (A)

(Preparation of catalyst R3)

First, 10 g of the chemically-treated montmorillonite obtained above was fed into a three-necked flask (volume 1 L). The chemically-treated montmorillonite was mixed with heptane (66 mL) and slurried. Next, triisobutylaluminum (25 mmol: 34.0 mL of a heptane solution with a concentration of 143 mg/mL) was added to the slurry, and they were stirred for one hour. Then, the slurry was washed with heptane to reach a residual liquid rate of 1/100, thereby adjusting the total volume of the slurry to 50 mL.

In another flask (volume 200 mL), the rac-dichloro[1,1'-dimethylsilylene bis{2-methyl-4-(4-chlorophenyl)-4-hydroazulenyl}]hafnium (complex 3) (0.15 mmol) synthesized in the synthesis example 3 was dissolved in toluene (30 mL) to prepare a solution.

Triisobutylaluminum (0.60 mmol: 0.85 mL of a heptane solution with a concentration of 143 mg/mL) was added to the 1 L flask containing the chemically-treated montmorillonite. Then, the solution was added thereto, and they were stirred at room temperature for 60 minutes.

Then, 170 mL of heptane was added to the mixture. A slurry thus obtained was introduced into a 1 L autoclave.

After the internal temperature of the autoclave was controlled to 40°C, preliminary polymerization was carried out, while feeding propylene at a rate of 5 g/hour and keeping the internal temperature at 40°C for 4 hours. Then, the propylene feeding was stopped, and residual polymerization reaction was carried out for one hour. After the supernatant of a catalyst slurry thus obtained was removed therefrom by decantation, to the residue thus left, triisobutylaluminum (6 mmol: 8.5 mL of a heptane solution with a concentration of 143 mg/mL) was added, and they were stirred for 5 minutes.

The catalyst slurry was dried under reduced pressure for one hour, thereby obtaining 31.0 g of a preliminary polymerization catalyst (catalyst R3). The preliminary polymerization ratio of the catalyst was 2.10.

(Polymerization)

Polymerization was carried out in the same manner as Reference Example 1, except that 300 mg (the mass excluding the preliminarily polymerized polymer) of the catalyst R3 was introduced in place of the catalyst R1, and 0.51 NL of hydrogen was introduced. As a result, 1570 g of a polymer was obtained. The obtained polymer was measured by MFR, GPC and NMR. The results are shown in Table 2.

From the results of Reference Examples 1 to 3 shown in Table 2, the following were revealed. The complex 1 of Synthesis Example 1 can be used as a metallocene compound that gives the following propylene homopolymer a-1 when propylene homopolymerization of the component [A-1] is carried out at 70°C: the terminal vinyl rate (Rv) is 0.5 or more. The complex 2 of Synthesis Example 2 can be used as a metallocene compound that gives the following propylene homopolymer a-2 when propylene homopolymerization of the component [A-2] is carried out at 70°C: the number average molecular weight (Mn) is larger than the propylene homopolymer a-1; the Rv is 0.1 or more and less than 0.5; and the ratio of the number of copolymerized terminal vinyl forming LCB out of the number of the produced terminal vinyl {LCB number / ([Vi] + LCB number)} of the propylene homopolymer a-2 is larger than that of the propylene homopolymer a-1.

The complex 3 of Synthesis Example 3 is a metallocene compound that gives the following propylene homopolymer when propylene homopolymerization is carried out at 70°C: while the Mn is larger than the propylene homopolymer a-1, the Rv is 0.

(5) Measurement and evaluation method

For the branched propylene-based polymers obtained in Examples 1 to 6 and Comparative Examples 1 to 5 and for the propylene-based polymer obtained in Reference Examples 1 to 3, the following parameters (5-1) to (5-12) were measured and calculated by the methods described in this Description.

(5-1) MFR was measured; moreover, using the measured MFR value, values were obtained by calculating the right side of the formulae (1), (2) and (7).
(5-2) Mn, Mw, Mz, Mw/Mn and Mz/Mw which were obtained by GPC
(5-3) $W100\times10^4$, $W200\times10^4$ and $W200\times10^4/W100\times10^4$ in the integral molecular weight distribution curve obtained by GPC
(5-4) $Mw_{abs}$, g' ($100\times10^4$), g' ($Mw_{abs}$) and [g' ($Mw_{abs}$)-g' ($100\times10^4$)] which were obtained by 3D-GPC
(5-5) Ea in dynamic viscoelasticity measurement
(5-6) mm, [2,1 bond] amount, and [1,3 bond] amount measured by $^{13}$C-NMR
(5-7) LCB number measured by $^{13}$C-NMR
(5-8) The amount of components eluted at a temperature of 40°C or less in the elution curve obtained by TREF (soluble content at 40°C in TREF)
(5-9) SHI@$1.0s^{-1}$ obtained by elongational viscosity measurement and MBI
(5-10) Melt tension (MT230)
(5-11) MaxDraw
(5-12) [Vi], Terminal vinyl rate, LCB Number/([Vi] + LCB Number)

(6) Evaluation results

The results of the examples, the comparative examples and the reference examples are shown in Table 1, Table

2, FIG. 2, FIG. 4 and FIG. 5.

[Table 1]

Table 1

| Items | Example 1 | Example 2 | Example 3 | Example 4 | Example 5 | Example 6 |
|---|---|---|---|---|---|---|
| MFR (g/10 min) | 4.5 | 9.0 | 21 | 32 | 1.2 | 2.7 |
| Mw (g/mol) | 317,071 | 254,173 | 220,021 | 191,933 | 377,355 | 309,568 |
| Mw/Mn | 4.1 | 3.9 | 3.4 | 3.5 | 4.8 | 4.5 |
| Mz/Mw | 3.1 | 3.1 | 3.0 | 2.6 | 2.7 | 2.7 |
| $W100\times10^4$ (wt. %) | 4.41 | 4.45 | 2.86 | 1.64 | 9.10 | 5.76 |
| $W200\times10^4$ (wt. %) | 0.69 | 0.67 | 0.39 | 0.08 | 1.55 | 0.79 |
| $W200\times10^4/W100\times10^4$ | 0.16 | 0.15 | 0.14 | 0.05 | 0.17 | 0.14 |
| Formula (2) Right-side value | 0.31 | 0.29 | 0.27 | 0.26 | 0.34 | 0.32 |
| Formula (2) (When satisfied: ○) | ○ | ○ | ○ | ○ | ○ | ○ |
| $g'(100\times10^4)$ | 0.72 | 0.70 | 0.65 | 0.63 | 0.69 | 0.72 |
| $g'(Mw_{abs})$ | 0.85 | 0.85 | 0.84 | 0.80 | 0.79 | 0.87 |
| $g'(Mw_{abs})$ - $g'(100\times10^4)$ | 0.13 | 0.15 | 0.19 | 0.18 | 0.10 | 0.15 |
| Ea (kJ/mol) | 66.7 | 64.6 | 58.5 | 55.0 | 69.9 | 62.8 |
| Formula (1) Right-side value | 57.8 | 54.1 | 49.5 | 47.2 | 64.9 | 60.5 |
| Formula (1) (When satisfied: ○) | ○ | ○ | ○ | ○ | ○ | ○ |
| mm (%) | 97.8 | 97.8 | 97.8 | 98.1 | 98.1 | 98.1 |
| [2,1] (mol %) | 0.09 | 0.09 | 0.09 | 0.11 | 0.15 | 0.15 |
| [1,3] (mol %) | 0.11 | 0.11 | 0.11 | 0.08 | 0.08 | 0.08 |
| LCB number (per 1000 monomers) | 0.2 | 0.2 | 0.2 | 0.2 | 0.2 | 0.2 |
| Soluble content at 40°C in TREF (wt. %) | 0.4 | 0.6 | 0.2 | 0.6 | 0.4 | 0.4 |
| SHI@1.0/s | 1.80 | 1.76 | 1.55 | 1.08 | 1.74 | 1.55 |
| MBI | 0.29 | 0.30 | 0.46 | 0.34 | 0.33 | 0.45 |
| MT230 (g) | 5.0 | 2.5 | 1.1 | 0.4 | 5.3 | 3.3 |
| MaxDraw (m/min) | 191 | 361 | 556 | >600 | 112 | 331 |
| Formula (7) Right-side value | 93 | 153 | 226 | 263 | -20 | 34 |
| Formula (7) (When satisfied: ○) | ○ | ○ | ○ | ○ | ○ | ○ |

Table 1-continued

| Items | Comparative Example 1 | Comparative Example 2 | Comparative Example 3 | Comparative Example 4 | Comparative Example 5 |
|---|---|---|---|---|---|
| MFR (g/10 min) | 3.3 | 9.9 | 15 | 0.8 | 40 |
| Mw (g/mol) | 324,704 | 256,187 | 246,785 | 392,335 | 187,702 |
| Mw/Mn | 4.5 | 4.8 | 4.9 | 5.5 | 3.9 |
| Mz/Mw | 4.3 | 4.6 | 4.7 | 4.2 | 5.5 |
| $W100\times10^4$ (wt. %) | 7.05 | 4.88 | 4.57 | 9.67 | 2.66 |
| $W200\times10^4$ (wt. %) | 2.46 | 1.59 | 1.42 | 3.59 | 0.76 |
| $W200\times10^4/W100\times10^4$ | 0.35 | 0.33 | 0.31 | 0.37 | 0.29 |
| Formula (2) Right-side value | 0.31 | 0.29 | 0.28 | 0.34 | 0.26 |
| Formula (2) (When satisfied: ○) | × | × | × | × | × |
| $g'(100\times10^4)$ | 0.89 | 0.84 | 0.80 | 0.85 | 0.77 |
| $g'(Mw_{abs})$ | 0.91 | 0.89 | 0.87 | 0.93 | 0.89 |
| $g'(Mw_{abs})$ - $g'(100\times10^4)$ | 0.03 | 0.05 | 0.07 | 0.08 | 0.12 |
| Ea (kJ/mol) | 57.3 | 52.9 | 51.1 | 58 | 45 |
| Formula (1) Right-side value | 59.5 | 53.6 | 51.3 | 67.2 | 46.0 |
| Formula (1) (When satisfied: ○) | × | × | × | × | × |
| mm (%) | 98.6 | 98.4 | 98.4 | 98.6 | 98.4 |
| [2,1] (mol %) | 0.20 | 0.21 | 0.21 | 0.20 | 0.22 |
| [1,3] (mol %) | 0.30 | 0.29 | 0.29 | 0.30 | 0.26 |
| LCB number (per 1000 monomers) | 0.1 | 0.1 | 0.1 | 0.1 | 0.1 |
| Soluble content at 40°C in TREF (wt. %) | 0.5 | 0.6 | 0.6 | 0.5 | 0.8 |
| SHI@1.0/s | 1.85 | 1.50 | 1.42 | 1.78 | 1.14 |
| MBI | 0 | 0.11 | 0.18 | -0.19 | 0.19 |
| MT230 (g) | 12.5 | 5.0 | 2.9 | Non-evaluable | 0.6 |
| MaxDraw (m/min) | 22 | 76 | 171 | Non-evaluable | 250 |
| Formula (7) Right-side value | 66 | 161 | 197 | -57 | 282 |
| Formula (7) (When satisfied: ○) | × | × | × | × | × |

[Table 2]

Table 2

| Items | Reference Example 1 | Reference Example 2 | Reference Example 3 |
|---|---|---|---|
| Catalyst | Catalyst R1 | Catalyst R2 | Catalyst R3 |

(continued)

| Items | Reference Example 1 | Reference Example 2 | Reference Example 3 |
|---|---|---|---|
| Catalyst component A | Complex 1 | Complex 2 | Complex 3 |
| Catalyst amount (mg) | 300 | 100 | 300 |
| Hydrogen (NL) | 0.51 | 1.19 | 0.51 |
| Polymerization temperature (°C) | 70 | 70 | 70 |
| Yield (g) | 1740 | 1153 | 1570 |
| MFR (g/10 min) | 72 | 1.3 | 1.0 |
| Mn (g/mol) | 58971 | 73839 | 148356 |
| g'($100\times10^4$) | 0.59 | 0.77 | 1.0 |
| g'($Mw_{abs}$) | 0.84 | 0.98 | 1.0 |
| g'($Mw_{abs}$) - g'($100\times10^4$) | 0.25 | 0.21 | 0.0 |
| mm (%) | 98.0 | 98.3 | 98.2 |
| [2,1] (mol %) | 0.05 | 0.35 | 0.07 |
| [1,3] (mol %) | 0.13 | 0.05 | 0.13 |
| Rv | 0.75 | 0.20 | 0 |
| LCB number / ([Vi] + LCB Number) | 0.23 | 0.33 | - |
| Ea (kJ/mol) | 51.1 | 53.4 | 42.4 |
| Formula (1) (When satisfied: ○) | ○ | × | × |

As shown in Table 1, the branched propylene-based polymers of Comparative Examples 1 to 5 did not have the molecular weight distribution and branch distribution specified in the present invention, and they had high melt tensions while the amount of the component having a branch in the region where $M_{abs} = 100\times10^4$, was small. Accordingly, it is estimated that there were many components having an extraordinarily long relaxation time, and the Ea was low relative to the MFR. As a result, it is thought that the ductility when melting was poor.

Meanwhile, as shown in Table 1, all of the branched propylene-based polymers of Examples 1 to 6 satisfied the properties (1) to (4), and they had a branched propylene structure different from the conventional structure, especially in the molecular weight distribution and the branch distribution. In addition, as for the branched propylene-based polymers of Examples 1 to 6, the MFR was from 1.2 g/10 min to 32 g/10 min; the MT was from 0.4 g to 5.3 g; and while they retained melt tension necessary for molding, the MaxDraw was 112 m/min or more and more than 600 m/min. As just described, the branched propylene-based polymers of Examples 1 to 6 were excellent in ductility when melting, while retaining fluidity and melt tension necessary for molding. It was shown that the MaxDraw and MFR of the branched propylene-based polymers of Examples 1 to 6 satisfied the relation represented by the formula (7) and the ductility was excellent relative to MFR.

## Claims

**1.** A branched propylene-based polymer comprising propylene and 0 mol % to 11 mol % of ethylene and an $\alpha$-olefin containing 4 or more carbon atoms, and having the following properties (1) to (4):

property (1): a melt flow rate (MFR) measured at a temperature of 230°C and a load of 2.16 kg is from 0.1 g/10 min to 100 g/10 min;
property (2): a ratio (Mz/Mw) between a z average molecular weight (Mz) and a weight average molecular weight (Mw), both of which are obtained by gel permeation chromatography (GPC), is from 2.5 to 4.0;
property (3): in a molecular weight distribution curve obtained by 3D-GPC, a branching index g' ($100\times10^4$) at an absolute molecular weight $M_{abs}$ of $100\times10^4$ is from 0.60 to 0.75; and
property (4): a flow activation energy (Ea) kJ/mol obtained by measuring dynamic viscoelasticity and the MFR satisfy the following formula (1):

$$Ea \geq -12.5 \times \log(MFR) + 66 \quad \text{Formula (1).}$$

2. The branched propylene-based polymer according to Claim 1, further having the following property (2-2): property (2-2): in an integral molecular weight distribution curve obtained by GPC, a ratio ($W200\times10^4/W100\times10^4$) of a percentage ($W200\times10^4$) of a component having a molecular weight of $200\times10^4$ or more to a percentage ($W100\times10^4$) of a component having a molecular weight of $100\times10^4$ or more and the MFR satisfy the following formula (2):

$$(W200\times10^4/W100\times10^4) < -0.05 \times \log(MFR) + 0.34 \quad \text{Formula (2).}$$

3. The branched propylene-based polymer according to Claim 1 or 2, further having the following properties (5) and (5-2):

   property (5): a mesotriad fraction measured by $^{13}$C-NMR is 95.0% or more and less than 99.0%, and property (5-2): a heterologous bond (2,1 bond) amount is in a range of from 0 mol % to 0.30 mol %, and a heterologous bond (1,3 bond) amount is in a range of from 0 mol % to 0.25 mol %.

4. The branched propylene-based polymer according to Claim 1 or 2, further having the following property (6): property (6): a number of long-chain branches measured by $^{13}$C-NMR is from 0.1/1000 monomers to 0.5/1000 monomers.

5. The branched propylene-based polymer according to Claim 1 or 2, further having the following property (7): property (7): in an elution curve obtained by temperature rising elution fractionation measurement with o-dichlorobenzene, an amount of a component eluted at a temperature of 40°C or less, is from 0.1 mass % to 2.5 mass %.

6. The branched propylene-based polymer according to Claim 1 or 2, further having the following property (8): property (8): a strain hardening index at a strain rate (dε/dt) of 1.0/sec is from 0.70 to 2.50.

7. The branched propylene-based polymer according to Claim 1 or 2, further having the following property (9): property (9): a multi-branching index is from 0.20 to 1.00.

[FIG. 1]

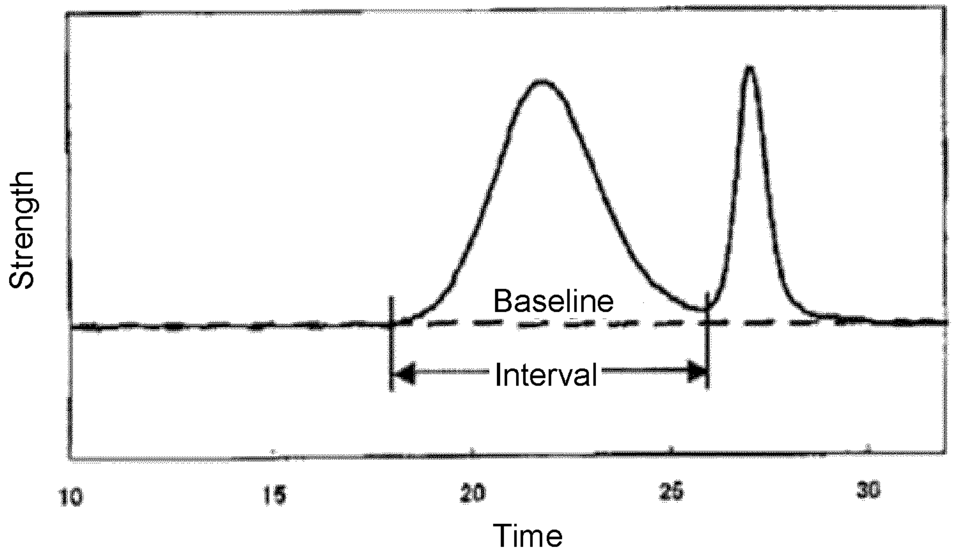
Strength
Baseline
Interval
10
15
20
25
30
Time

[FIG. 2]

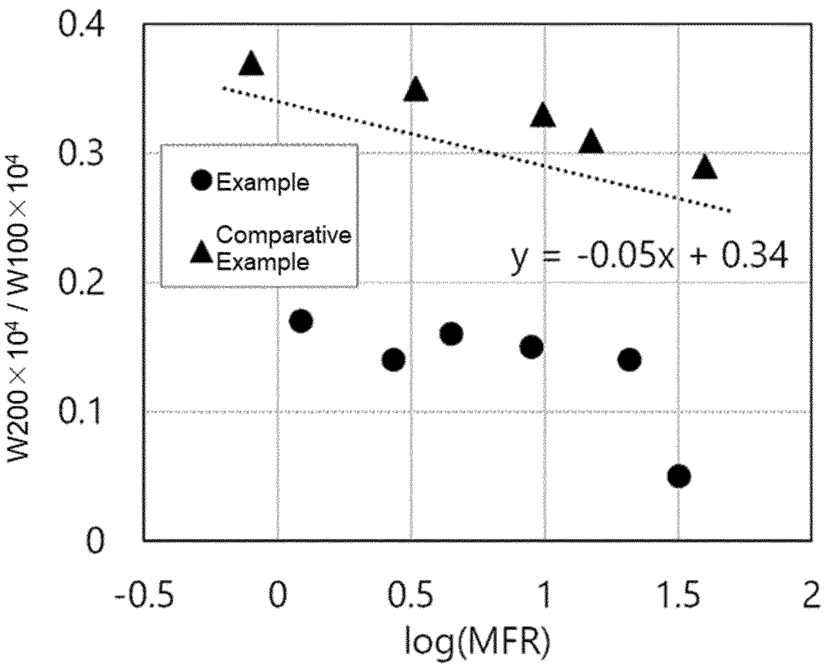
0.4
0.3
0.2
0.1
0
W200×10⁴ / W100×10⁴
Example
Comparative Example
y = -0.05x + 0.34
-0.5
0
0.5
1
1.5
2
log(MFR)

[FIG. 3]

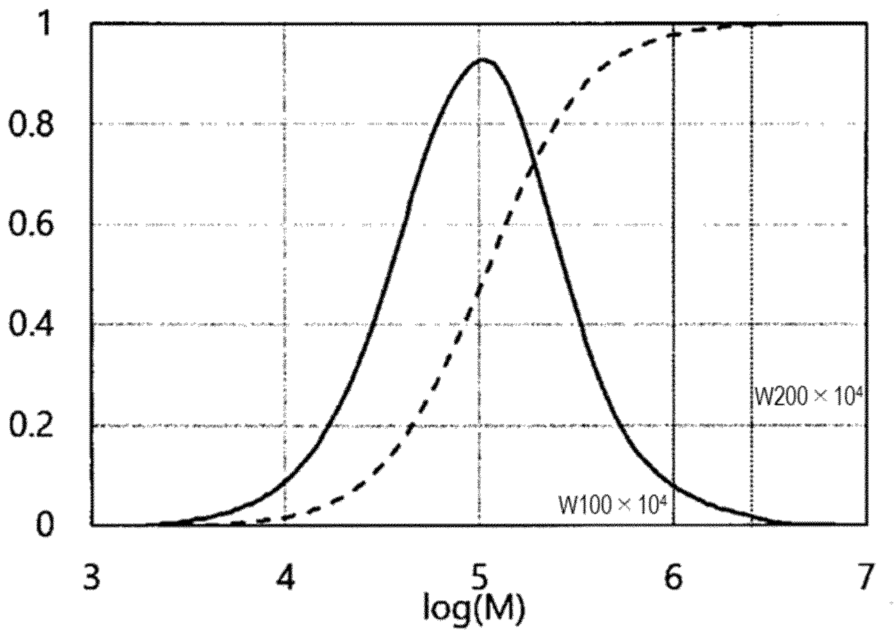

1
0.8
0.6
0.4
0.2
0
3
4
5
6
7
log(M)
W200 × 10⁴
W100 × 10⁴


[FIG. 4]

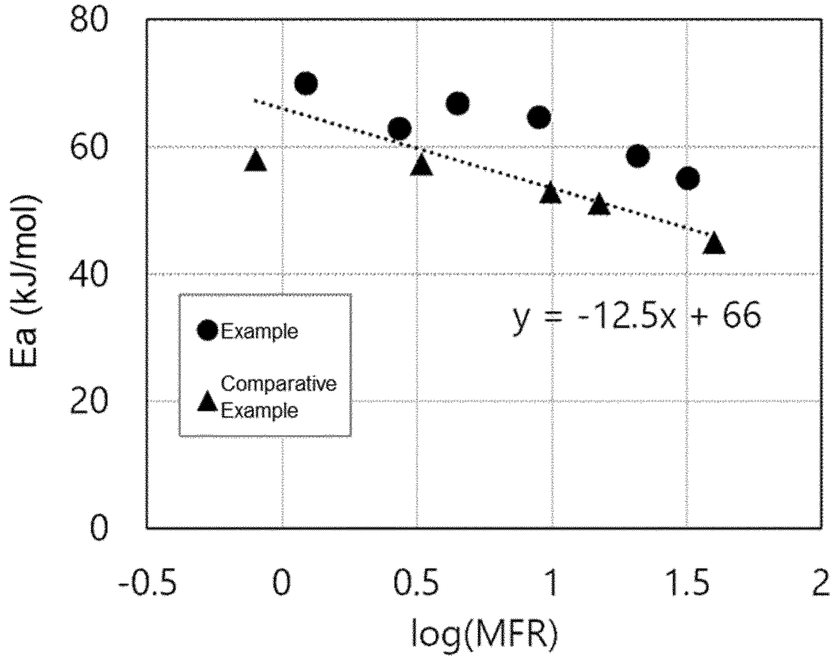

80
60
40
20
0
Ea (kJ/mol)
-0.5
0
0.5
1
1.5
2
log(MFR)
Example
Comparative Example
y = -12.5x + 66

[FIG. 5]

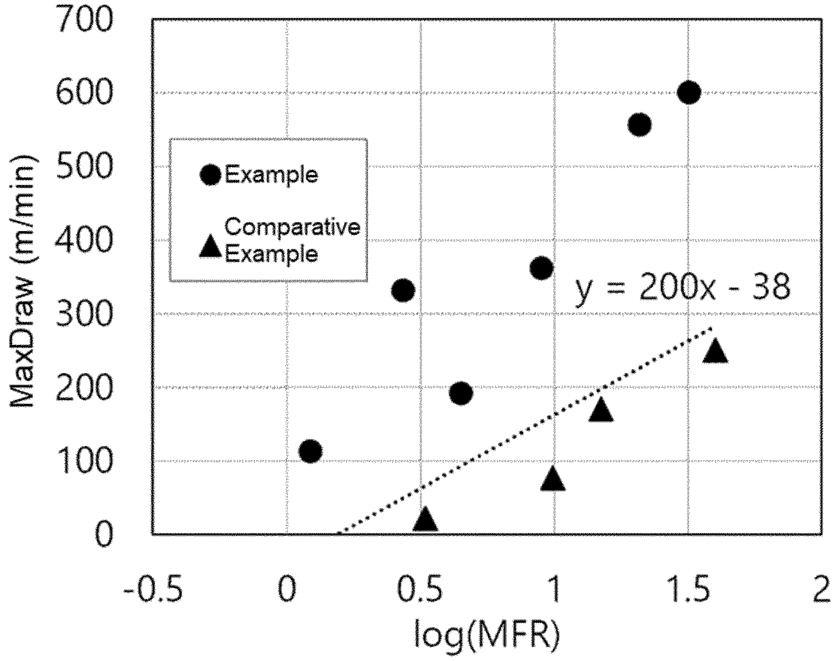
700
600
500
400
300
200
100
0
MaxDraw (m/min)
Example
Comparative Example
y = 200x - 38
-0.5
0
0.5
1
1.5
2
log(MFR)

## INTERNATIONAL SEARCH REPORT

International application No.
**PCT/JP2023/010630**

**A. CLASSIFICATION OF SUBJECT MATTER**

***C08F 10/06***(2006.01)i
FI: C08F10/06

According to International Patent Classification (IPC) or to both national classification and IPC

**B. FIELDS SEARCHED**

Minimum documentation searched (classification system followed by classification symbols)

C08F6/00-246/00; 301/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-167143 A (JAPAN POLYPROPYLENE CORP.) 06 September 2012 (2012-09-06) entire text | 1-7 |
| A | JP 2022-024535 A (JAPAN POLYPROPYLENE CORP.) 09 February 2022 (2022-02-09) entire text | 1-7 |
| A | JP 2019-151858 A (JAPAN POLYPROPYLENE CORP.) 12 September 2019 (2019-09-12) entire text | 1-7 |
| A | JP 2001-064314 A (IDEMITSU PETROCHEMICAL CO., LTD.) 13 March 2001 (2001-03-13) entire text | 1-7 |
| A | JP 2021-152155 A (JAPAN POLYPROPYLENE CORP.) 30 September 2021 (2021-09-30) entire text | 1-7 |
| A | US 2004/0132935 A1 (EXXONMOBIL CHEMICAL CO.) 08 July 2004 (2004-07-08) entire text | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 May 2023** | **30 May 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/010630**

| Patent document cited in search report | Publication date (day/month/year) | Patent family member(s) | Publication date (day/month/year) |
|---|---|---|---|
| JP 2012-167143 A | 06 September 2012 | (Family: none) | |
| JP 2022-024535 A | 09 February 2022 | (Family: none) | |
| JP 2019-151858 A | 12 September 2019 | (Family: none) | |
| JP 2001-064314 A | 13 March 2001 | (Family: none) | |
| JP 2021-152155 A | 30 September 2021 | (Family: none) | |
| US 2004/0132935 A1 | 08 July 2004 | WO 2004/037871 A1<br>AU 2003284027 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001525460 W
- JP H10338717 A
- JP 2002523575 W
- JP 2001064314 A
- JP 2007154121 A
- JP 2009057542 A
- JP 2009533540 W
- JP 2007528925 W
- JP 2021152155 A
- JP 2018162391 A
- JP 2012149160 A
- JP 2003517010 W
- JP H11240909 A

### Non-patent literature cited in the description

- Developments in Polymer Characterization-4. Applied Science Publishers, 1984
- Developments in Polymer Characterization. Applied Science, 1984, vol. 4
- *Polymer*, 2004, vol. 45, 6495-6505
- *Macromolecules*, 2000, vol. 33, 2424-2436
- *Macromolecules*, 2000, vol. 33, 6945-6952
- Andrade's viscosity equation. Kagaku Jiten
- Polymer Journal. Asakura Shoten Publishing Co., Ltd., 1984, vol. 16, 717
- *Macromolecules*, 1975, vol. 8, 687
- *Polymer*, 1989, vol. 30, 1350
- *Polymer*, 2001, vol. 42, 8663
- *Macromol. Rapid Commun.*, 2000, vol. 21, 1103-1107
- **HARUO SHIROZU**. Nendo Kobutsu Gaku (Clay mineralogy). Asakura Shoten, 1988